# EUROPEAN PATENT APPLICATION

(11) **EP 4 636 535 A1**
(43) Date of publication of application: **22.10.2025**
(21) Application number: 24170995.5
(22) Date of filing: 18.04.2024
(51) Int. Cl.: G06F 1/12, G06F 1/14

(54) **DISTRIBUTED ELECTRICAL SYSTEM WITH CENTRALIZED CONTROLLER AND CLOCK SIGNAL**

(71) Applicant: Instagrid GmbH, 71636 Ludwigsburg (DE)
(72) Inventor: Gutknecht, Philipp, Mönsheim (DE); Dessecker, Julian, Schwaikheim (DE); Piano, Diego, Markgröningen (DE)
(74) Representative: Eisenführ Speiser

(57) **Abstract**

A distributed electrical system that includes a cluster controller and at least one synchronized electrical unit. The cluster controller includes a cluster controller clock circuit configured to generate a cluster clock signal, a cluster integrator logic circuit with a counter that is incremented by toggling the cluster clock signal, and a pulse width modulation (PWM) generating circuit configured to generate a system clock signal and to encode the value of the counter as a frame of symbols onto the system clock signal. The at least one synchronized electrical unit includes a tunable clock circuit configured to generate a unit clock signal, a tuning circuit configured to adjust the tunable clock circuit such that the unit clock signal is aligned in at least frequency with the system clock signal, and a symbol decoder circuit configured to determine a global time value. Related methods and software products are also disclosed.

## Description

### TECHNICAL FIELD

This disclosure relates to a distributed electrical system that includes a central controller and one or more electrical (e.g., power) units and, more specifically, to synchronizing the control and operation of the electrical unit(s).

### BACKGROUND

**A** power supply may refer to an electrical device that supplies electrical power to an electrical load. A purpose of a power supply may be to convert electric current from a power source to the correct voltage, current, and frequency to power the load. Some power supplies are standalone pieces of equipment, while others may be built into a load (e.g., appliances) to which the power supply provides power. In some examples, a power supply may be portable, such that the power supply has an internal power storage device, such as a battery, for providing power to a load when other power sources are not available to provide power to the load. Situations where this may be desirable include construction sites, live events, disaster responses, and/or the like.

In some instances, different electrical devices may be required to be connected together, e.g., multiple power supplies connected together to be able to serve the demands of a load. With this, different devices (e.g., power supplies) may be required to be properly connected for purposes of communicating data. In such a situation, it may be desirable to synchronize the output voltage waveform for each power supply to be able to connect them in parallel with respect to their AC input. It also may be desirable to immediately shut down all power supplies due to a global error or the like. While each power supply may have a local clock source, drift is expected. Proper coordination between each power supply may require synchronizing a clock signal between them such that the local clock is synchronized to a global system time.

### SUMMARY

Provided is a distributed electrical system and method of operating a distributed electrical system that addresses at least some of the problems identified above. In some non-limiting embodiments, the distributed electrical system, method and software product disclosed herein implement a mechanism for synchronizing local clock times of individual electrical units with a global system time via a clock signal. Based on the system time, the operations may be synchronized between several electrical units.

In some non-limiting embodiments, disclosed is a distributed electrical system, comprising: a cluster controller including: a cluster controller clock circuit operable to generate a cluster clock signal; a cluster integrator logic circuit comprising a counter, wherein a value of the counter is incremented by a toggling of the cluster clock signal; and a pulse width modulation (PWM) generating circuit operable to generate a system clock signal and to encode the value of the counter as a frame of symbols onto the system clock signal, wherein each symbol of the frame of symbols is encoded onto the system clock signal by setting a falling edge of the system clock signal to a predetermined position relative to a preceding rising edge, and at least one synchronized electrical unit communicatively connected to the cluster controller and adapted to receive the system clock signal, wherein each synchronized electrical unit includes: a tunable clock circuit operable to generate a unit clock signal; a tuning circuit operable to adjust the tunable clock circuit such that the unit clock signal is aligned in at least frequency with the system clock signal, wherein the tuning circuit adjusts the tunable clock circuit based upon relative time values, wherein the relative time values are derived at least in part from detecting the rising or falling edges of the system clock signal; a symbol decoder circuit operable to decode the frame of symbols from the system clock signal by detecting a position of the rising edges relative to the corresponding falling edges of the system clock signal to determine a global time value, wherein the synchronized electrical unit is operable to perform at least one function according to the global time value.

Also disclosed is a method for operating a distributed electrical system comprising a cluster controller and at least one synchronized electrical unit communicatively connected to the cluster controller, the method comprising: generating, e.g., by a cluster controller clock circuit, a cluster clock signal; incrementing a value of a counter of a cluster integrator logic circuit by toggling of the cluster clock signal; generating, e.g., by a pulse width modulation (PWM) generating circuit, a system clock signal by encoding the value of the counter as a frame of symbols onto the system clock signal, wherein each symbol of the frame of symbols is encoded onto the system clock signal by setting a falling edge of the system clock signal to a predetermined position relative to a preceding rising edge; transmitting the system clock signal from the cluster controller to the synchronized electrical unit; generating, e.g., by a tunable clock circuit of the synchronized electrical unit, a unit clock signal; adjusting, by a tuning circuit of the synchronized electrical unit, the tunable clock circuit such that the unit clock signal is aligned in at least frequency with the system clock signal, wherein the tuning circuit adjusts the tunable clock circuit based upon relative time values, wherein the relative time values are derived at least in part from detecting the rising or falling edges of the system clock signal; decoding, e.g., by a symbol decoder circuit of the synchronized electrical unit, the frame of symbols from the system clock signal by detecting a position of the rising edges relative to the corresponding falling edges of the system clock signal to determine a global time value; and operating the synchronized electrical unit based on the global time value to perform at least one function.

In some non-limiting embodiments, at least one of the power units comprises an H-bridge circuit. Additionally or alternatively, in some non-limiting embodiments, at least one of the power units comprises an inverter, such as an H-bridge inverter. Additionally or alternatively, in some non-limiting embodiments, at least one of the power units comprises a plurality of inverters (e.g., H-bridge inverters). Additionally or alternatively, in some non-limiting embodiments, at least one of the power units comprises a plurality of inverters arranged to operate as a multi-level inverter (e.g., a cascaded inverter such as a cascaded H-bridge inverter).

Also disclosed are systems comprising means for performing steps of any of the methods herein disclosed. Further disclosed are electrical systems comprising means for performing the steps of any of the herein disclosed methods.

Further disclosed are software products comprising instructions, which when executed by a distributed electrical system or one or more suitable controllers cause the system and/or any of the controllers to perform steps of the herein disclosed methods. Thus, further disclosed are software products comprising instructions which when executed by one or more processors of an electrical system cause any of the processors to perform the steps of any of the herein disclosed methods.

**These** and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

Additional advantages and details are explained in greater detail below with reference to the non-limiting, example embodiments that are illustrated in the accompanying figures, in which:
Fig. 1A is a block diagram schematic of a distributed energy system in accordance with non-limiting embodiments of the present disclosure;
Fig. 1B is a high level block diagram schematic of some of the elements of a single power unit (PU) and the cluster controller (CC) of distributed energy system shown in Fig. 1 in accordance with non-limiting embodiments of the present disclosure;
Fig. 1C is a circuit diagram of an example PU, according to some non-limiting embodiments or aspects;
Fig. 1D is a diagram schematic of an example energy storage module of the power module of Fig. 1C, according to some non-limiting embodiments of the present disclosure;
Figs. 1E and 1F are circuit diagrams of an example energy storage module, according to some non-limiting embodiments or aspects;
Fig. 2 is a more detailed block diagram schematic of the cluster controller (CC) of Fig. 1B of distributed energy system shown in Fig. 1 in accordance with non-limiting embodiments of the present disclosure;
Fig. 3 is a schematic drawing of an example (C)LOCK signal 36 (top) and symbol representation (bottom) that may be used with the distributed energy system shown in the figures in accordance with non-limiting embodiments of the present disclosure; and
Figs. 4A-4C are a more detailed block diagram schematics of the elements of a single power unit (PU) of distributed energy system shown in Fig. 1 in accordance with non-limiting embodiments of the present disclosure.

### DESCRIPTION

Various non-limiting embodiments will now be described with reference to the accompanying figures where like reference numbers correspond to like or functionally equivalent elements.

As used herein, spatial, or directional terms, such as "left", "right", "inner", "outer", "above", "below", and the like, relate to the disclosure as it is shown in the drawing figures. However, it is to be understood that the disclosure can assume various alternative orientations and, accordingly, such terms are not to be considered as limiting. Further, as used herein, all numbers expressing dimensions, physical characteristics, processing parameters, quantities of ingredients, reaction conditions, and the like, used in the specification and claims are to be understood as being modified in all instances by the term "approximately" or "about". Accordingly, unless indicated to the contrary, the numerical values set forth in the following specification and claims may vary depending upon the desired properties sought to be obtained by the present disclosure.

At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. "A" or "an" refers to one or more.

**As** used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

In this disclosure, elements or circuits described as being "programmed," "configured," or "operable" may be formed of:
(1) one or more discrete electrical components, such as, without limitation, resistor(s), capacitor(s), inductor(s), transistor(s), op-amp(s), and the like in some combination thereof as determined by the application; or
(2) one or more controller(s), processor(s), memory, storage component(s), an input component, an output component, and a communication interface, all connected by a bus in some combination thereof as determined by the application; or
(3) some combination of (1) and (2) as determined by the application.

In an example, each processor may be implemented in hardware, firmware, software or some combination thereof. In an example, each processor may include a processor (e.g., a central processing unit (CPU), a graphics processing unit (GPU), an accelerated processing unit (APU), etc.), a microprocessor, a digital signal processor (DSP), and/or any processing component (e.g., a field-programmable gate array (FPGA), an application-specific integrated circuit (ASIC), etc.) that can be programmed perform a function. Memory may include random access memory (RAM), read only memory (ROM), and/or another type of dynamic or static storage device (e.g., flash memory, magnetic memory, optical memory, etc.) that stores information and/or instructions for use by the processor.

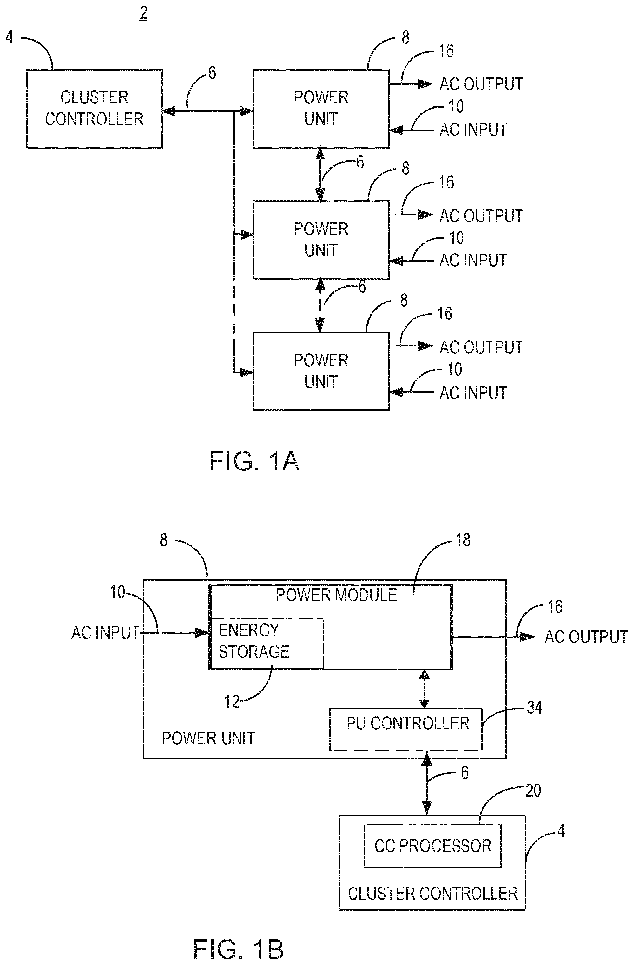

With reference to Figs. 1A and 1B, a distributed energy system 2, or distributed electrical system, in accordance with the principles of the present disclosure may include a cluster controller (CC) 4 communicatively connected via a data interface or communication link 6 to one or more power units (PU) 8, which may also be referred to as synchronized electrical units. In this disclosure, when referring to element or reference number 8, the terms "power supply unit", "power unit", "PU", and "synchronized electrical unit" may be used interchangeably.

In an example, where the distributed energy system 2 includes a number of PUs 8, the communication link 6 may communicatively connect the PUs 8 in parallel, whereupon signals output by CC 4 on communication link 6 are received by each PU 8 on or about the same time, or in series, whereupon signals output by CC 4 on communication link 6 are first received by a first PU 8 and then subsequently passed from first PU 8 to each downstream PU 8. In Fig. 1A, both a parallel and series connection of communication link 6 are shown, though only a series or only a parallel configuration may exist on a particular implementation of system 2.

In some non-limiting embodiments or examples, the communication link 6 may represent a communication line that may include a number of individual signal and/or data lines that may be used, as required, for communication and control between CC 4 and each PU 8. In some non-limiting embodiments, communication link 6 may include a digital bus, such as controller area network (CAN) bus, or any suitable communication interface. In some non-limiting embodiments, the plurality of bus signal lines may include one or more bus signal lines used for purposes of scheduling, one or more bus signal lines for purposes of communicating control signals to each PU 8, a reference voltage line (e.g., ground (GND) signal line), a voltage (e.g., 12V) supply line, and one or more bus signal lines used for purposes of transmitting clock and other timing signals to each PU 8 as described herein. In some non-limiting embodiments, the voltage supplied via voltage supply line may be used to activate (e.g., start, power up, initiate a scheduling scheme and/or an addressing scheme, etc.) PU 8. In some non-limiting embodiments, some or all of the bus signal lines that comprise communication link 6 may travel from CC 4 to each PU 8, either in series or in parallel. Each PU 8 may include an input port for receiving communication link 6 (e.g., receiving each signal line of communication link 6) a PU 8 link section in which various circuits or other modules can connect to or communicate with communication link 6 (e.g., with each signal line of communication link 6), and an output port. The output port may provide an interface to connect communication link 6 (e.g., bus signal lines) to a subsequent PU 8. For example, a subsequent PU 8 may include an input port that connects (e.g., via one or more wires or cables) to output port of first PU 8 so as to allow CC 4 to communicate with each PU 8 connected in series via communication link 6 and to pass signals, including the clock signal discussed herein, to each PU 8.

By way of example, CC 4 may utilize communication link 6 to perform a scheduling scheme for scheduling one or more PUs 8. This may include transmitting over communication link 6 a first signal to a first PU 8 wherein the first signal may include a token that has a value, such as "true." The token (e.g., the value of the token) may be used to determine whether a valid connection has been made with PU 8 and/or whether a scheduling scheme is active. PU 8 can then continue the scheduling scheme by transmitting another signal that includes a token that has the predetermined value to a second PU 8 connected in series. If second PU 8 (or a subsequent PU 8) is the last PU 8 in a series, then this last PU 8 may forego continuing the scheduling scheme and may instead transmit a signal indicative of termination (e.g., completion of scheduling) back to CC 4.

By way of further example, CC 4 and PU 8 may utilize communication link 6 to perform an addressing scheme for addressing one or more PUs 8 wherein the addressing scheme may follow the scheduling scheme. For example, a first PU 8 may transmit over communication link 6 a first request message (e.g., a message that includes a request for addressing information) to CC 4 and CC 4 may transmit a first response message that includes addressing information to first PU 8 wherein the addressing information may include information that causes first PU 8 to assign a first address to first PU 8. A second PU 8 (e.g., a second PU 8 in series with first PU 8) may then transmit over communication link 6 to CC 4 a second request message (e.g., a message that includes a request for addressing information) and CC 4 may transmit a second response message that includes addressing information to second PU 8 wherein the addressing information may include information that causes second PU 8 to assign a second address to second PU 8. This can continue until all PUs 8 in the series have been assigned an address.

In some non-limiting embodiments or examples, each PU 8 may include an AC input 10 coupled to an electrical energy storage module 12 of a power module 18. The energy storage module 12 may include one or more energy storage element(s) 13, e.g., without limitation, one or more rechargeable batteries and/or one or more capacitors and/or such components for storage of the energy received via AC input. At a suitable time, the DC power stored in the energy storage 12 (as a DC voltage) may be output as mains AC output power (e.g., an AC voltage) on an AC output 16 via a power module 18 (e.g., which may include or function as an inverter circuit) operating under the control of a PU controller or processor 34, the operation of which may be synchronized and/or controlled by a CC processor 20 of the CC 4 via the communication link 6. As discussed further herein, a pulse-width modulation (PWM) signal may be applied to the power module 18 to output an AC waveform from the DC voltage stored in the one or more energy storage element(s) 12.

In this disclosure, when referring to element or reference number 20, the terms "CC controller", "CC processor" and "cluster controller" may be used interchangeably. In this disclosure, when referring to element or reference number 34, the terms "PU controller", "PU processor" and "unit controller" may be used interchangeably.

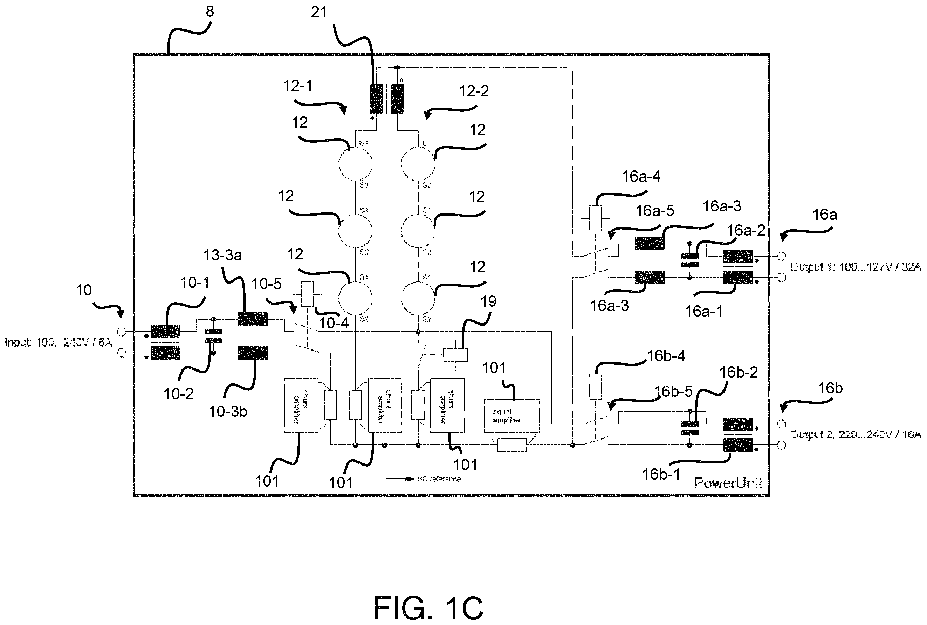

With reference to Figs. 1B-1F, in some non-limiting embodiments, each PU 8 may include a power module 18. In some non-limiting embodiments, the power module 18 may include at least one energy storage module 12. A configuration with six energy storage modules 12 is shown in Fig. 1C. However, other configurations are also available, including a configuration in which 24 energy storage modules 12 are connected together.

Referring now to Fig. 1C, shown is a circuit diagram of an example PU 8, according to some non-limiting embodiments or aspects. The number and arrangement of components shown are provided as an example. In some non-limiting embodiments or aspects, PU 8 may include additional components, fewer components, different components, or differently arranged components than those shown. Additionally or alternatively, a set of components (e.g., one or more components) of PU 8 may perform one or more functions described as being performed by another set of components of PU 8.

In some non-limiting embodiments or aspects, as shown in Fig. 1C, input connection 10 may be connected to input choke 10-1. Input choke 10-1 may be connected to input capacitor 10-2 and/or at least one input inductor (e.g., first input inductor 10-3a and/or second input inductor 10-3b, collectively referred to as "input inductors 10-3," and individually referred to as "input inductor 10-3"). For example, input choke 10-1 may be provided for electromagnetic compatibility (EMC) reasons. Similarly, input capacitor 10-2 may be provided as an EMC capacitor (and/or class-X capacitor), which may stabilize the input voltage and/or make the input less impedant at higher frequencies. For example, input inductor(s) 10-3 may be used to operate the PU 8 in a controlled current mode.

In some non-limiting embodiments or aspects, first output connection 16a may be connected to first output choke 16a-1. First output choke 16a-1 may be connected to at least one of capacitor 16a-2 and/or inductors 16a-3.

In some non-limiting embodiments or aspects, second output connection 16b may be connected to second output choke 16b-1. Second output choke 16b-1 may be connected to capacitor 16b-2.

In some non-limiting embodiments or aspects, each of the chokes (e.g., input choke 10-1, first output choke 16a-1, and/or second output choke 16b-1) may be common-mode chokes and/or the like, e.g., used for EMC performance. It shall be appreciated that further discussion of EMC inductors or capacitors is not essential to the scope or generality of the present teachings.

In some non-limiting embodiments or aspects, input switch 10-4 may selectively connect and/or disconnect input 10-5 from first set 12a and second set 12b of energy storage modules 12. In some non-limiting embodiments or aspects, to operate in a third mode of operation (e.g., a charging mode of operation) input switch 10-4 at input 10-5 may be switched to a first state (e.g., closed, activated, and/or the like). For example, switching input switch 10-4 to the first state (e.g., closed, activated, and/or the like) may allow current to flow from input connection 10 through input 10-5 to first set 12-1 and second set 12-2 of energy storage modules 12 (e.g., to charge energy storage modules 12). In some non-limiting embodiments or aspects, a power source (e.g., mains electric power, generator power, renewable power (e.g., solar, wind, and/or the like), and/or the like) may be connected to input connection 10. In some non-limiting embodiments or aspects, controller 34 may control module controllers of energy storage modules 12 to charge energy storage components 13 thereof (e.g., based on power from the power source).

In some non-limiting embodiments or aspects, to discontinue the third mode of operation (e.g., stop charging) and/or to prevent current from flowing to input connection 10 when PU 8 is not in the third (e.g., charging) mode of operation, input switch 10-4 at input 10-5 may be switched to a second state (e.g., open, deactivated, and/or the like).

In some non-limiting embodiments or aspects, at least one output switching element (e.g., first output switch 16a-4 and/or second output switch 16b-4, collectively referred to as "output switches 16-4," and individually referred to as "output switch 16-4") may selectively connect and/or disconnect outputs 16a-5 and 16b-5 from first set 12a and second set 12b of energy storage modules 12.

In some non-limiting embodiments or aspects, to operate in the first mode of operation, in addition to switching of switch 19 to a first state (e.g., closed, activated and/or the like), first output switch 16a-4 may be switched to a first state (e.g., closed, activated and/or the like). For example, this may allow current to flow from first set 12a and second set 12b of energy storage modules 12 through first output 16a-5 (and inductors 16a-3 and/or capacitor 16a-2) to first output connection 16a (e.g., to supply power to a load connected to first output connection 16a). In some non-limiting embodiments or aspects, to prevent current from flowing to first output connection 16a when PU 8 is not in the first mode of operation, first output switch 16a-4 may be switched to a second state (e.g., opened, deactivated and/or the like).

In some non-limiting embodiments or aspects, to operate in the second mode of operation, in addition to switching of switch 19 to a second state (e.g., opened, deactivated and/or the like), second output switch 16b-4 may be switched to a first state (e.g., closed, activated and/or the like). For example, this may allow current to flow from first set 12a and second set 12b of energy storage modules 12 through second output 16a-5 (and capacitor 16b-2) to second output connection 16b (e.g., to supply power to a load connected to second output connection 16b). In some non-limiting embodiments or aspects, to prevent current from flowing to second output connection 16b when PU 8 is not in the second mode of operation, second output switch 16b-4 may be switched to a second state (e.g., opened, deactivated and/or the like).

In some non-limiting embodiments, the first mode of operation and the second mode of operation may be used to provide multi-voltage operation via the PU 8. For example, in the first mode of operation, the first set 12a and second set 12b of energy storage modules 12 may be connected in parallel, while in the second mode of operation, the first set 12a and second set 12b of energy storage modules 12 may be connected in series. It shall be appreciated that the first mode of operation may be provide an output voltage which is lower than the output voltage provided in the second mode of operation, however the output current provided in the first mode of operation may be larger than the output current provided in the second mode of operation. For example, the first mode of operation may provide an 110 V output, while the second mode of operation provides a 220 V output. This can advantageously allow the PU 8 for multi-voltage domain operation. For example, 110 V AC mains voltage domain is predominantly used in the US, while 220 V AC mains voltage domain is used in Europe. The PU 8 can thus allow flexibility in using electrical appliances rated for any of the voltage domains. A particular advantage of the shown configuration can be that output power can be similar or identical in either mode. For example, assuming identical sets (12a and 12b) operating identically, output current in the first mode can be double of the output current in the second mode even though the output voltage in the first mode is half of the output voltage in the second mode. This can allow similar power levels to be used despite the voltage domain which the PU 8 output is operating in. The examples of 110 V and 220 V are non-limiting to the teachings as any voltage domain, or operating frequency can be realized with the present structure. Moreover, it is not limiting to have the two domains which are related by an integer factor to each other in terms of voltage and/or current. It shall be appreciated the operating cycle (e.g., order of plurality of modules) can be adapted according to the operating mode of the PU 8.

In some non-limiting embodiments or aspects, each of input switch 10-4 and output switches 16-4 may include at least one of a switch, a contactor, a transistor, any combination thereof, and/or the like. For example, each of input switch 10-4 and output switches 16-4 may include at least one of an SPST switch, a DPDT switch, an SPDT switch, a DPST switch, any combination thereof, and/or the like. For example, each of input switch 10-4 and output switches 16-4 may include at least one of a DPDT switch or a DPST switch. For the purpose of illustration, as shown in Fig. 1C, each of input switch 10-4 and output switches 16-4 may include a DPST switch or a DPDT switch.

In some non-limiting embodiments or aspects, PU 8 may include current sensors 101, which may be in communication with PU controller 34 (e.g., a microcontroller). In some non-limiting embodiments or aspects, each current sensor 101 may include a shunt amplifier. For example, each shunt amplifier may refer to a common potential (e.g., reference voltage), to which PU controller 34 (e.g., a microcontroller) also may refer. In some non-limiting embodiments or aspects, at least some (e.g., all, a subset, and/or the like) of current sensors 101 may be any other suitable type of current sensor. For example, a current sensor 101 may include measuring voltage drop across a resistor connected in series (e.g., to at least one of 12a and/or second set 12b of energy storage modules 12), e.g., to measure the current flowing through the resistor (and/or any component in series with the resistor). In some non-limiting embodiments or aspects, at least one current sensor 101 may be of a different type than another current sensor 101. For example, a current sensor 101 connected to of 12a of energy storage modules 12 may be of a different type than another current sensor 101 connected to second set 12b of energy storage modules 12.

In some non-limiting embodiments or aspects, by measuring current at locations of current sensors 101, the following may be measured (e.g., by PU controller 34 and/or the like): output current (e.g., in a redundant manner), input current (e.g., in a redundant manner), circular current (e.g., if strings are connected in parallel). In some non-limiting embodiments or aspects, current sensors may measure current flowing through each of first set 12a and second set 12b of energy storage modules 12. As such, relative measurements may be performed to detect if a circular (e.g., loop) current is flowing between first set 12a and second set 12b of energy storage modules 12. In other words, such relative measurements may be used to detect that the load current is divided evenly between the sets. Such measurements also may be used for orchestrating the operation of energy storage modules 12, e.g., in such a manner that the circular (e.g., loop) current may be reduced (e.g., eliminated). Additionally or alternatively, such orchestration may also include disabling certain energy storage modules 12 in any of sets 12a-b, even if such disabling causes an unequal number of active energy storage modules 12 between the sets 12a-b. This may help running the PU 8, for example, even if energy storage modules 12 between sets 12a-b have different charge levels. Additionally or alternatively, such orchestration may include first module voltages of first set 12a being interleaved with second module voltages of second set 12b. Interleaving of the module voltages can be done by phase shifting output voltage of one set with respect to the output of the other set. Additionally or alternatively, such orchestration may include tolerating, or even in some non-limiting embodiments or aspects, creating, an imbalance in voltages between the first set 12a and the second set 12b. This may result in the loop current which tends to flow from one set 12a to the other set 12b to be a low frequency current which can be used, e.g., to equalize state of charge between the two sets 12a-b. Choke 21 even in such non-limiting embodiments or aspects, may block the high frequency currents, but may allow low frequency or DC current to flow from the set 12a having a higher voltage than the other set 12b. As such, PU 8 may be more robust, flexible, and balanced. In some non-limiting embodiments or aspects, current sensors 101 may be leveraged for making absolute measurements, such as determining total current flowing through first set 12a and/or second set 12b of energy storage modules 12. It shall be appreciated that said imbalance may be caused by unequal number of energy storage modules 12 operating in one set 12a as compared to the number of energy storage modules 12 operating in the other set 12b. Additionally or alternatively, the imbalance may be due to unequal charge level between the two sets 12a-b. Similarly, the PU 8 may also include circuit for voltage measurement in one or more networks of the PU 8. It is neither essential nor limiting to the present disclosure to specify which voltage measurement circuit or scheme must be used.

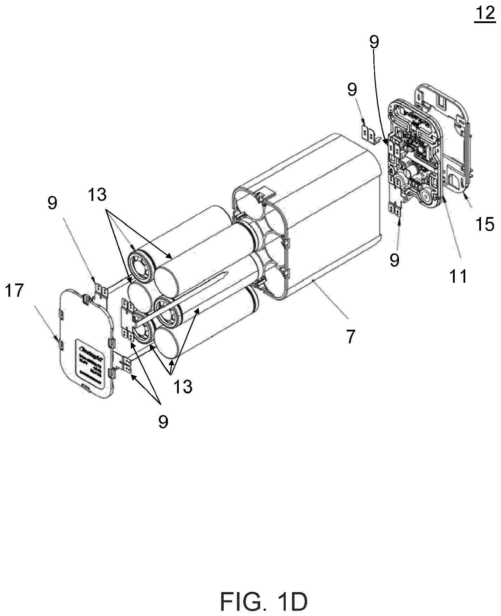

Referring now to FIG. 1D, depicted is a schematic diagram of an example energy storage module 12, according to some non-limiting embodiments or aspects. As shown in FIG. 1D, energy storage module 12 may include housing 7, at least one energy storage component 13, module controller 11, connectors 9, top cover 15, and bottom cover 17. The number and arrangement of components shown are provided as an example. In some non-limiting embodiments or aspects, energy storage module 12 may include additional components, fewer components, different components, or differently arranged components than those shown. Additionally or alternatively, a set of components (e.g., one or more components) of energy storage module 12 may perform one or more functions described as being performed by another set of components of energy storage module 12.

In some non-limiting embodiments or aspects, housing 7 may include plastic, metal, any combination thereof, and/or the like. For example, housing 7 may include a plastic housing.

In some non-limiting embodiments or aspects, housing 7 may be configured to hold at least one (e.g., a plurality of) energy storage components 13. For example, as shown in FIG. 1D, housing 7 may be shaped to have six energy storage components 13 uniformly distributed in an interior space defined by housing 7.

In some non-limiting embodiments or aspects, each energy storage component 13 may include at least one of a battery, a rechargeable battery (e.g., a lithium-ion battery), a cell (e.g., battery cell, an electrochemical cell, and/or the like), a rechargeable cell, a capacitor, an ultra-capacitor, any combination thereof, and/or the like. For example, as shown in FIG. 1D, each energy storage component 13 may include a cylindrical cell (e.g., lithium-ion battery cell).

In some non-limiting embodiments or aspects, module controller 11 may include a controller and associated circuitry. Optionally, module controller 11 may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function.

In some non-limiting embodiments or aspects, connectors 9 may connect the terminals (e.g., ends) of each energy storage component 13 to module controller 11. Additionally or alternatively, at least one connector 9 may connect at least one terminal (e.g., end) of one energy storage component 13 to another terminal of another energy storage component 13. For example, connectors 9 may include a conductive (e.g., electrically conductive) material, such as metal and/or the like. In some non-limiting embodiments or aspects, some or all of the connectors 9 may be used for energy storage component 13 (e.g., cell) voltage measurements.

In some non-limiting embodiments or aspects, each of top cover 15 and bottom cover 17 may include plastic, metal, any combination thereof, and/or the like. For example, each of top cover 15 and bottom cover 17 may include a plastic cover. In some non-limiting embodiments or aspects, top cover 15 and bottom cover 17 may be configured to (e.g., sized and shaped to) cover openings at top and bottom ends, respectively, of housing 7. In some non-limiting embodiments or aspects, top cover 15 may include a first electrical connection (e.g., S1, as described herein), a second electrical connection (e.g., S2, as described herein), and/or at least one communication connection, as described herein. For example, these connections may allow for electrical and/or communicative connection between module controller 11 and external components (e.g., other components of the power supply system external to the energy storage module housing).

In some non-limiting embodiments or aspects, energy storage module 12 may include a battery module. For example, the battery module may include at least one cell (e.g., a battery cell, such as a rechargeable battery cell). For the purpose of illustration, as shown in FIG. 1D, the battery module may include six cells (e.g., rechargeable battery cells, such as lithium-ion cells, supercapacitors, and/or the like).

In some non-limiting embodiments or aspects, energy storage components 13 (e.g., battery cells) of battery storage module 12 may be connected in series. In some non-limiting embodiments or aspects, energy storage components 13 (e.g., battery cells) of battery storage module 12 may be connected in parallel.

In some non-limiting embodiments or aspects, at least some (e.g., a subset of) energy storage components 13 may be connected in series, for example, so that the combined (e.g., summed and/or the like) voltage of the series-connected components satisfies (e.g., equals, exceeds, and/or the like) the target (e.g., desired) operating voltage of energy storage module 12. In some non-limiting embodiments or aspects, at least some (e.g., a subset of) energy storage components 13 may be connected in parallel, for example, so that the combined (e.g., summed and/or the like) capacity (e.g., current) of the parallel-connected components satisfies (e.g., equals, exceeds, and/or the like) the target (e.g., desired) a target capacity (e.g., operating current of energy storage module 12). For example, energy storage module 12 may include a plurality of subsets of energy storage components 12 such that energy storage components 13 of each subset are connected in series (e.g., to combine to output the desired module voltage), and the subsets may be connected in parallel (e.g., to combine to output the desired module current).

In some non-limiting embodiments or aspects, energy storage module 12 may be the same as or similar to or include at least some components that are the same as or similar to the battery modules described in at least one of U.S. Patent Application Pub. No. 2022/0037891, U.S. Patent Application Pub. No. 2022/0247030, U.S. Patent Application Pub. No. 2022/0359918, and/or U.S. Patent Application Pub. No. 2022/0360094, and U.S. Provisional Patent Application No. 63/216,996, filed February 23, 2024, the disclosures of each of which are hereby incorporated by reference in their entireties.

In the example shown in Figs. 1B-1F, each energy storage module 12 may include at least one (e.g., six) energy storage components 13, e.g., a lithium battery cell and/or a super capacitor, and at least one switching element (e.g., first switching element 14-1, second switching element 14-2, third switching element 14-3, and/or fourth switching element 14-4, collectively referred to as "switching elements 14," and individually referred to as "switching element 14"), first electrical connection S1, and second electrical connection S2. In some non-limiting embodiments or aspects, switching elements 14 may be part of (e.g., integrated on, connected to, and/or the like) a module controller 11.

In some non-limiting embodiments or aspects, switching elements 14 may be switched (e.g., opened, closed, activated, deactivated, and/or the like) to selectively connect energy storage component(s) 13 to first electrical connection S1 and/or second electrical connection S2, e.g., to control a module voltage across first electrical connection S1 and second electrical connection S2. For example, switching elements 14 may be switched so that (1) first electrical connection S1 and second electrical connection S2 are both connected to negative side (e.g., DC minus) of energy storage component(s) 13, (2) first electrical connection S1 is connected to the negative side (e.g., DC minus) of energy storage component(s) 13 and second electrical connection S2 is connected to the positive side (e.g., DC plus) of energy storage component(s) 13 or (3) first electrical connection S1 is connected to the positive side (e.g., DC plus) of energy storage component(s) 13 and second electrical connection S2 is connected to the negative side (e.g., DC minus) of energy storage component(s) 13. As such, the voltage across first electrical connection S1 and second electrical connection S2 may be zero, negative, or positive, respectively.

For the purpose of illustration, and by way of example only, to connect both first electrical connection S1 and second electrical connection S2 to the negative side (e.g., DC minus) of energy storage component(s) 13, fourth switching element 14-4 and third switching element 14-3 may both be activated (e.g., closed, set to act as a closed switch, and/or the like), while second switching element 14-2 and first switching element 14-1 are deactivated (e.g., open, set to act as an open switch, and/or the like). To connect first electrical connection S1 to the negative side (e.g., DC minus) and connect second electrical connection S2 to the positive side (e.g., DC plus) of energy storage component(s) 13, fourth switching element 14-4 and second switching element 14-2 may be activated, while third switching element 14-3 and first switching element 14-1 are deactivated. To connect first electrical connection S1 to the positive side (e.g., DC plus) and second electrical connection S2 to the negative side (e.g., DC minus) of energy storage component(s) 13, first switching element 14-1 and third switching element 14-3 may be activated, and fourth switching element 14-4 and second switching element 14-2 may be deactivated. In other words, the switching elements 14 may be operated to be in states such as: a high-impedance (Hi-Z) state: in which all of the switching elements 14are deactivated; a bypass state: in which the low-side switching elements 14-3 and 14-4 are activated while the high-side switching elements 14-1 and 14-2 are deactivated; and two polarity states in which the energy storage component(s) 13 are connected between the first electrical connection S1 and the second electrical connection S2 in opposite polarity manner.

In some non-limiting embodiments or aspects, each switching element 14 may include at least one of a transistor (e.g., bipolar transistor, field-effect transistor (FET), metal-oxide-semiconductor field-effect transistor (MOSFET), and/or the like), a switch, a contactor, any combination thereof, and/or the like. The energy storage module 12 may include one or more driver circuits, such as a gate driver circuit, for driving each switching element 14. For example, the driver circuits may be part of (e.g., integrated on, connected to, and/or the like) module controller 11.

In some non-limiting embodiments or aspects, each switching element 14 may be driven, or controlled, via a module controller 11 or by PU controller 34 which may control switching element 14 directly or provide commands to module controller 11. For example, module controller 11 may control the switching elements 14 to selectively connect energy storage component(s) 13 to first electrical connection S1 and/or second electrical connection S2, as described herein. For example, module controller 11 may be connected to each switching element 14 in order to drive, or optionally control, such switching element 14. In some non-limiting embodiments or aspects, the module controller 11 provides signals to the gate driver circuit for driving the switching elements 14.

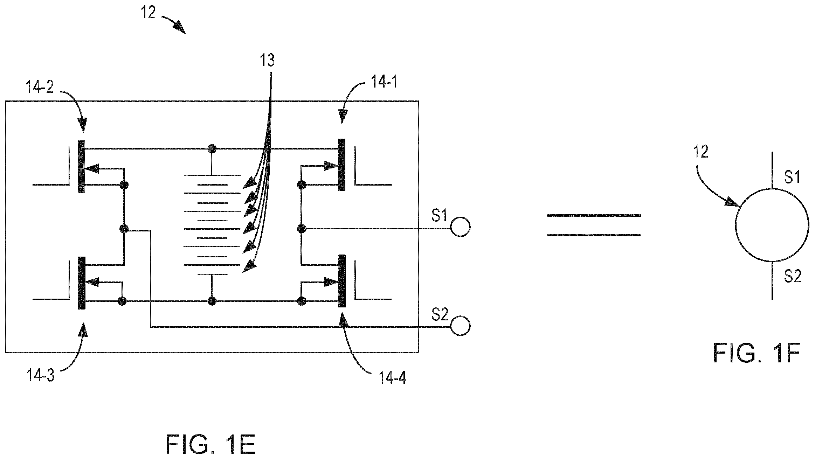

For purposes of other figures herein, each energy storage module 12 may be represented by the symbol shown in Fig. 1F.

Each energy storage module 12 may also include a module controller 11 that is programmed or configured to control the operation of the switching elements 14 to output the AC output power in response to command(s) from the PU controller 34. Module controller 11 may include first level battery management system data acquisition circuitry that allows the PU controller 36 to read relevant battery parameters and/or general-purpose input/output options that can be set and read by the PU controller 34.

In some non-limiting embodiments or aspects, PU controller 34 may include a controller and associated circuitry. For example, PU controller 34 may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function. In some non-limiting embodiments or aspects, PU controller 34 may be communicatively connected to energy storage module(s) 12 (e.g., module controller(s) 11 thereof) by a communication connection.

In some non-limiting embodiments or aspects, PU controller 34 may command module controller(s) 11 of energy storage module(s) 12 to cause a respective duty cycle of a respective module voltage of each respective energy storage module 12 to generate an output voltage based on a combination (e.g., sum and/or the like) of the respective module voltage of each respective energy storage module 12, as described herein. For example, by modulating the duty cycle differently for multiple energy storage module(s) 12 connected in series, a combined (e.g., summed) voltage may approximate (e.g., better approximate) an AC voltage waveform having a target amplitude and/or a target frequency, as described herein. In some non-limiting embodiments or aspects, the duty cycle of the respective module voltage may relate to a switched voltage scheme such as a PWM type waveform. For example, PU controller 34 may command module controller(s) 11 of energy storage modules 12 to switch their output voltage with certain frequency and/or duty-cycle. The exact number or range of the switching frequency is not essential to the scope or generality of the teachings of the present disclosure. Various energy storage modules 12 may be orchestrated, e.g., by PU controller 34, to generate an output voltage based on a combination of the respective module voltage of each respective energy storage module 12, as described herein. As such, voltage from the individual energy storage modules 12 (e.g., DC voltage) may be converted to suitable output voltages (e.g., AC voltages suitable for electrical devices designed to be connected to mains electric power in different regions).

Each PU 8 may also include at least one AC mains input 10 for receiving from an external AC source mains input power, e.g., 110 volts, for charging the energy storage components(s) 13 of the energy storage module 12. Each PU 8 may also include at least one AC mains output 16 for providing the AC output power output by the energy storage module(s) 12 of the power module 18 to a load. In an example, the power module 18 may include the six energy storage modules 12 shown in Fig. 1C that may be programmed or configured to cooperate under the control of the PU controller 34, to output AC output power to the load.

In some non-limiting embodiments or aspects, power module 18 may include a choke 21 that may be connected to first set 12a of energy storage modules 12 and second set 12b of energy storage modules 12. For example, as shown in FIG. 1C, choke 21 may be connected to first electrical connection S1 of one energy storage module 12 of first set 12a and to first electrical connection S1 of one energy storage module 12 of second set 12b.

In some non-limiting embodiments or aspects, choke 21 may include a first winding (e.g., a first inductor), a second winding (e.g., a second inductor). The choke 21 may also include a core (e.g., a toroidal core). In some non-limiting embodiments or aspects, the first winding of choke 21 may be connected to first set 12a of energy storage modules 12. Additionally or alternatively, the second winding of choke 21 may be connected to second set 12b of energy storage modules 12. A terminal of the first winding may have an electrical connection (e.g., connected together) to a terminal of the second winding. Thus, the two windings may share a common connection or terminal. As shown in Fig. 1B, such a common connection may be connected to first output 16a. In some non-limiting embodiments or aspects, choke 21 may be in the form of a center-tapped choke (e.g., center-tapped inductor). For example, as shown in Fig. 1C, choke may include a connection such that the choke is between first set 12a and second set 12b of energy storage modules 12 when first set 12a and second set 12b are in series. In such a case, for the example shown in Fig. 1C, the center tap (e.g., the common connection between the first winding and the second winding) of the inductor may be connected to first output 16a.

In some non-limiting embodiments or aspects, the first winding may be wound around at least a portion (e.g., a first portion) of the core, and/or the second winding may be wound around at least a portion (e.g., a second portion) of the core.

In some non-limiting embodiments or aspects, the first winding and the second winding may be bifilar windings around the toroidal core. For example, the first winding and the second winding may be parallel wound, series connected windings. As such, inductances of the first winding and the second winding may be the same or close to the same. Additionally, stray inductance may be reduced or minimized.

In some non-limiting embodiments or aspects, as shown in Fig. 1C, the voltage difference between windings of choke 21 (e.g., between a first winding of choke 21 connected to first set 12a and a second winding of choke 21 connected to second set 12b) may be equal to (or substantially equal to) the voltage difference between the available voltage per energy storage module 12 (e.g., which may be different for each energy storage module 12). For example, PU controller 34 may orchestrate the sets 12a-b so that the time-averaged voltage on both sets 12a-b is equal (e.g., no difference over a full (or multiple) PWM periods) and/or so that, within a PWM period, the voltage difference between sets may be close to zero (1V or -1 V), close to the available voltage of a single energy storage module 12 (e.g., 20 V or 21 V), or close to the sum of the available voltage of two energy storage modules 12 (e.g., 20 V + 21 V = 41 V), depending on how energy storage modules 12 are controlled (e.g., by PU controller 34).

In some non-limiting embodiments or aspects, switch 19 may be configured to switch between a first state and a second state. For example, upon switching of switch 19 to the first state (e.g., a closed state, an activated state, and/or the like), first set 12a of energy storage modules 12 may be connected in parallel with second set 12b of energy storage modules 12 to provide a first voltage to first output 16a. Additionally or alternatively, upon switching of switch 19 to the second state (e.g., open state, deactivated state, and/or the like), first set 12a of energy storage modules 12 may be connected in series with second set 12b of energy storage modules 12 to provide a second voltage to second output 16b.

In some non-limiting embodiments or aspects, switch 19 may include at least one of a switch, a contactor, any combination thereof, and/or the like. For example, switch 19 may include at least one of a single pole single throw (SPST) switch, a double pole double throw (DPDT) switch, a single pole double throw (SPDT) switch, a double pole single throw (DPST) switch, any combination thereof, and/or the like. For the purpose of illustration, as shown in FIG. 1C, switch 19 may include an SPST switch.

In some non-limiting embodiments or aspects, first output 16a may be associated with a first voltage. For example, the first voltage may be within a first range of 100-127 V AC (e.g., about 110 V) at a given frequency. It shall be appreciated that specifying a particular mains electric power frequency is not essential to the scope and generality of the teachings of the present disclosure, as different frequencies as desired can be implemented by driving the energy storage modules 12 as required. As an example, the 110 V AC may be delivered at or around 60 Hz frequency (e.g., as common in the United States). However, it is also possible to deliver 110 V AC at other frequencies, such as 50 Hz.

In some non-limiting embodiments or aspects, second output 16b may be associated with a second voltage at a given frequency. For example, the second voltage may be within a first range of 200-240 V AC (e.g., about 220 V). It shall be appreciated that specifying a particular mains electric power frequency is not essential to the scope and generality of the teachings of the present disclosure, as different frequencies as desired can be implemented by driving the energy storage modules 12 as required. As an example, the AC frequency may be at or around 50 Hz (e.g., as common in Europe). However, it is also possible to deliver 220 V AC at other frequencies, such as 60 Hz.

In some non-limiting embodiments or aspects, the first voltage (e.g., of first output 16a) may be less than the second voltage (e.g., of second output 16b). For example, the first voltage may be approximately half of the second voltage (e.g., half of the second voltage, within a tolerance range of half of the second voltage, and/or the like). As such, the same PU 8 may be configured in production for a given mains electric power domain, and/or power supply system PU 8 may be usable by the end-user in either of the two outputs 16a-b, thereby allowing the user the flexibility to use electrical devices from different mains electric power domains.

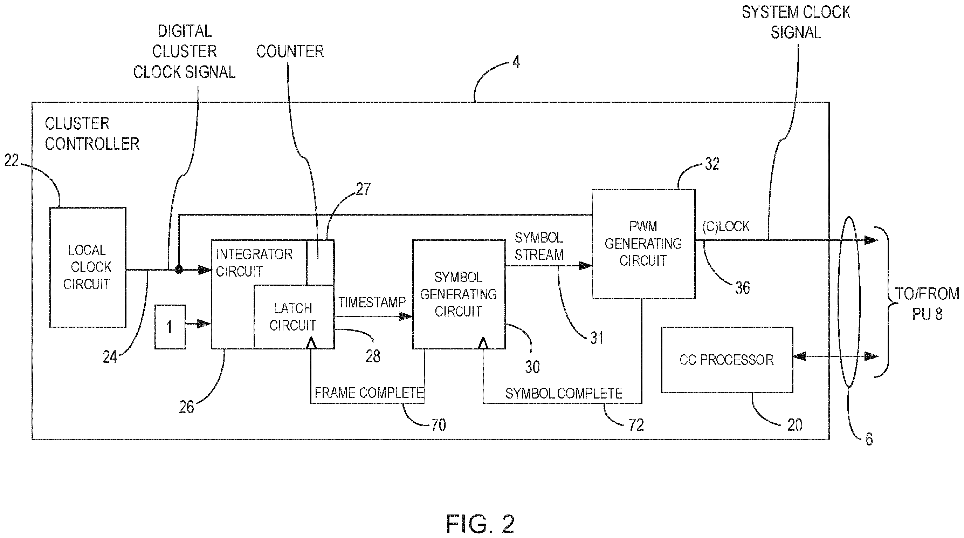

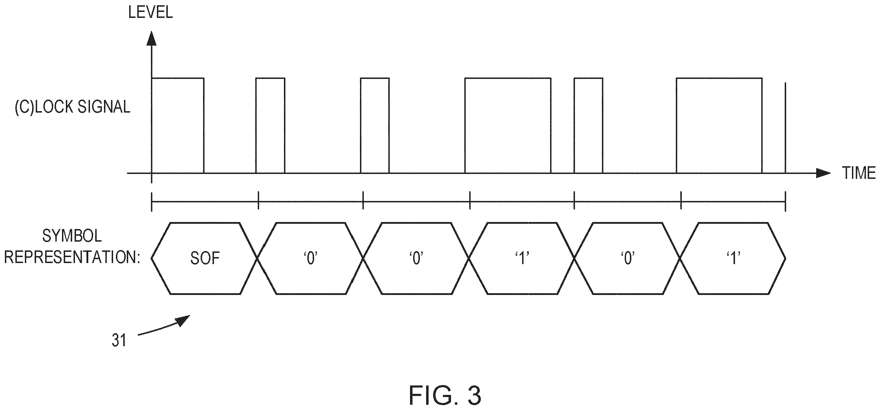

With reference to Figs. 2 and 3 and with continuing reference to Figs. 1A-1B, the components of the CC 4 that can generate a clock signal will now be described. In some non-limiting embodiments or examples, the CC 4 may include a CC local clock circuit 22 that may (e.g., it may be programmed or configured to) generate a digital CC clock signal 24 or digital cluster clock signal which may have a fixed frequency. In this disclosure, when referring to element or reference number 22, the terms "CC clock circuit" and "cluster controller clock circuit" may be used interchangeably. In this disclosure, when referring to element or reference number 24, the terms "digital CC clock signal", "CC clock signal", "digital cluster clock signal" and "cluster clock signal" may be used interchangeably.

The CC 4 may further include a discrete time integrator circuit, or CC integrator logic circuit 26. CC integrator logic circuit 26 may (e.g., it may be programmed or configured to) receive the CC clock signal 24. CC integrator logic circuit 26 may include e.g., a counter 27 to generate a value such as an integral value (e.g, an integer). The integral value may be incremented by any predetermined value, e.g., by one, or by 10, or by one hundred, for each tick or pulse output by the CC clock signal 24 generated by the CC clock circuit 22. The integral value may be incremented after each tick or pulse output by the CC clock signal 24 such that the integral value is increased in step with the occurrences of the ticks or pulses. Alternatively, the integral value may be increased (incremented) by any predetermined value all at once (e.g., by 10 or 100) after a corresponding number of ticks or pulses occurs (e.g., after 10 or 100 ticks, respectively) such that the integral value is incremented after the occurrence of a plurality of such ticks or pulses. Incrementing the integral value can thus be done by toggling of (e.g., in response to) the cluster clock signal 24. As described further below, this integral value may represent absolute time information, also called an absolute time value (e.g., an absolute timestamp), which may be used as a global time value (e.g., global timestamp) for the entire distributed energy supply system 2.

**The** CC 4 may also include CC latch logic 28. CC latch logic 28 may be in the form of a latch circuit. CC latch logic 28 may (e.g., it may be programmed or configured to) store a value, e.g., the integral value, of the counter 27, upon occurrence of an event. For example, CC latch logic 28 may be programmed or configured to store the integral value generated by counter 27 of CC integrator logic circuit 26, in response to a frame complete event signal 70 from a symbol generating circuit 30 (as described below). In an example, the CC latch logic 28 may be part of the CC integrator logic circuit 26. In this disclosure, when referring to element or reference number 28, the terms "latch circuit", "cluster latch logic", "latch logic" and "CC latch logic" may be used interchangeably.

In some non-limiting embodiments or examples, the CC 4 may include a symbol generating circuit 30 that may (e.g., it may be programmed or configured to) generate a frame of symbols 31. The frame of symbols 31, an example of which is shown in Fig. 3, may be provided to a PWM generating circuit 32 (described below). In an example, the symbol generating circuit 30 may convert the absolute time value (e.g., the integral value discussed above) stored in the CC latch logic 28 into a frame of symbols 31. The frame of symbols 31 may then be provided to the PWM generating circuit 32. As described further below, the frame of symbols 31 can include a start of frame ("SOF") symbol, a logic "1," and a logic "0," by way of example.

The PWM generating circuit 32 may (e.g., it may be programmed or configured to) encode the frame of symbols 31 onto a system clock signal, referred to herein as (C)LOCK signal 36. In one non-limiting embodiment, this encoding is done by adjusting or commanding the timing of falling edges of the (C)LOCK signal 36, whereupon the (C)LOCK signal 36 may have an adjustable duty cycle. In this disclosure, when referring to element or reference number 36, the terms "system clock signal" and "(C)LOCK signal" may be used interchangeably.

For example, the PWM generating circuit 32 may (e.g., it may be programmed or configured to) generate the (C)LOCK signal 36, which may be an edge aligned PWM signal, where the leading and/or rising edges are unmodulated. In an example, the frequency of (C)LOCK signal 36 may be in the range of 1 to 10kHz; however, the frequency is not necessarily limited to a value in this range. The trailing or falling edges of the generated PWM signal are at some fraction of the total PWM period time, and may be dependent upon the output of the symbol generating circuit 30. As non-limiting examples, the trailing or falling edges of the generated PWM signal may be adjusted or aligned at 25%, 50%, or 75% of the total PWM period time depending on the output of the symbol generating circuit 30. However, other values are also possible as well. The base frequency of the PWM generating circuit 32 may be a fraction, e.g., an integer fraction, multiple of the digital CC clock signal 24.

As mentioned, the PWM generating circuit 32 may (e.g., it may be programmed or configured to) encode the frame of symbols 31 onto a system clock signal or (C)LOCK signal 36, such as in the form of a bit stream of data where each symbol represents a bit (or bits) of the bit stream. In some non-limiting embodiments, each symbol of the frame of symbols 31 may be encoded onto the (C)LOCK signal 36 by setting (e.g., adjusting) a falling edge of the (C)LOCK signal 36 to a predetermined position relative to a preceding rising edge, such as a predetermined time after or distance from the preceding rising edge. In an example, each symbol of the data stream may be set by adjusting the timing of the trailing or falling edges of the PWM symbols and assigning a symbol based on the relative fraction of the falling edge of the total PWM period time. By way of illustration, one non-limiting embodiment of the encoding scheme can be as follows:
- falling edge at 25% of total PWM period time after rising edge = logic zero ("0");
- falling edge at 50% of total PWM period time after rising edge = start of frame (SOF) symbol; and
- falling edge at 75% of total PWM period time after rising edge = logic one ("1") symbol.

However, this timing is not to be construed in a limiting sense since different percentages of times of the falling edges of total PWM periods of time after rising edges may be used to represent the symbols (e.g. SOF, logic zero, and/or logic one). Transmission of the frame of symbols 31 may be considered complete after the generation of a subsequent SOF symbol such that a separate end of frame symbol need not be used. In some non-limiting embodiments, a "frame" may generally comprise a number of symbols that are transmitted on the frame of symbols 31, e.g., between the rising edge of one SOF symbol and the rising edge of a subsequent SOF symbol.

In an example, each time a PWM period is complete, the next symbol of the frame of symbols 31 may be transmitted to the PWM generating circuit 32. For example, in the example shown in Fig. 3, once transmission of the SOF symbol is complete, the symbol for a logic zero may be transmitted. Thereafter, the symbols for logic zero, logic one, logic zero, and logic one may be sequentially transmitted by the PWM generating circuit 32 after the end of each preceding PWM period. In the example shown in Fig. 3, the transmission of the SOF symbol, followed by the symbols for logic zero, logic zero, logic one, logic zero, and logic one may comprise an example of a frame.

In an example, a duration of each PWM period may be set by the PWM generating circuit 32 based on predetermined number of ticks or pulses of the CC clock signal 24. For example, 100 ticks or pulses of the CC clock signal 24 may represent the duration of a PWM period.

In an example, each time a symbol is transmitted (e.g., after one PWM period), the PWM generating circuit 32 may output (or assert) a symbol complete event signal 72 to the symbol generating circuit 30 which, in response, may transmit or deliver the next symbol of the frame of symbols 31 to the PWM generating circuit 32. Once all symbols of a frame of symbols 31 are transmitted to symbol generating circuit 30, symbol generating circuit 30 may output a frame complete event signal 70 to the CC latch logic 28 of the integrator circuit 26. As mentioned above, the frame complete event signal 70 can signal to the CC latch logic 28 to store an integral value (e.g., the next integral value) from the counter 27. Accordingly, each increase in the integral value from the counter 27 stored in the CC latch logic 28 may represent a completion of a frame of symbols 31 and encoding of the frame of symbols 31 onto the (C)LOCK signal 26.

**As** the base frequency of the (C)LOCK signal 36 is also derived from the local clock circuit 22, frames and symbols modulated on the (C)LOCK signal 36 may be considered a stream of subsequent absolute time values superimposed by synchronously generated relative time values. In one non-limiting embodiment, the transmission of each complete frame can provide absolute time values. The absolute time value associated or included with each frame can be determined from, e.g., the number of time units for the generation of each symbol and the number of symbols in a complete frame. For example, if a complete frame includes 32 symbols, including the SOF symbol, and each symbol is generated after 100 time units of local clock circuit 22 (e.g., 100 ticks or 100 µsec), then transmission of the first complete frame can be assigned or associated with an absolute time value of 0 time units and transmission of the second complete frame can be assigned or associated with an absolute time value of 3200 time units (e.g., 32 symbols x 100 time units per symbol), thereby providing absolute time values in terms of time units. The relative time values can be, for example, the distance between one rising edge (e.g., which may be unmodulated) and the subsequent rising edge within that same frame (or within subsequent frames). With respect to the example above wherein each frame includes 32 symbols, the frame may provide 31 such relative time values.

CC 4 may further transmit the (C)LOCK signal 36. In an example, CC4 can include a transmitter (not shown), such as a differential signal transmitter, to transmit (C)LOCK signal 36 to other components of the system 2, such as PUs 8. In a non-limiting embodiment, the differential signal transmitter can transmit (C)LOCK signal 36 with high noise immunity. Example transmitters include, but are not limited to, the RS-485 and RS-422 line of transceivers commercially available from various semiconductor manufactures. (C)LOCK signal 36 can be transmitted on a (C)LOCK signal bus which may be part of a communication link 6 between CC 4 and each PU 8 or between CC 4 and a first PU 8 wherein the (C)LOCK signal 36 is then subsequently transmitted between the first PU 8 and additional PUs 8 connected in series via, e.g., communication link 6. As mentioned above, communication link 6 can include other signals (e.g., control signals) transmitted from CC 4 to PU(s) 8.

For purposes of explaining the various components of CC 4, Fig. 2 illustrates CC processor 20 as a component separate from the various circuits discussed above. However, the various components of CC 4 discussed above, including the local clock circuit 22, integrator circuit 26, latch circuit 28, symbol generating circuit 30, and PWM generating circuit 32, may all be contained within or be part of CC processor 20.

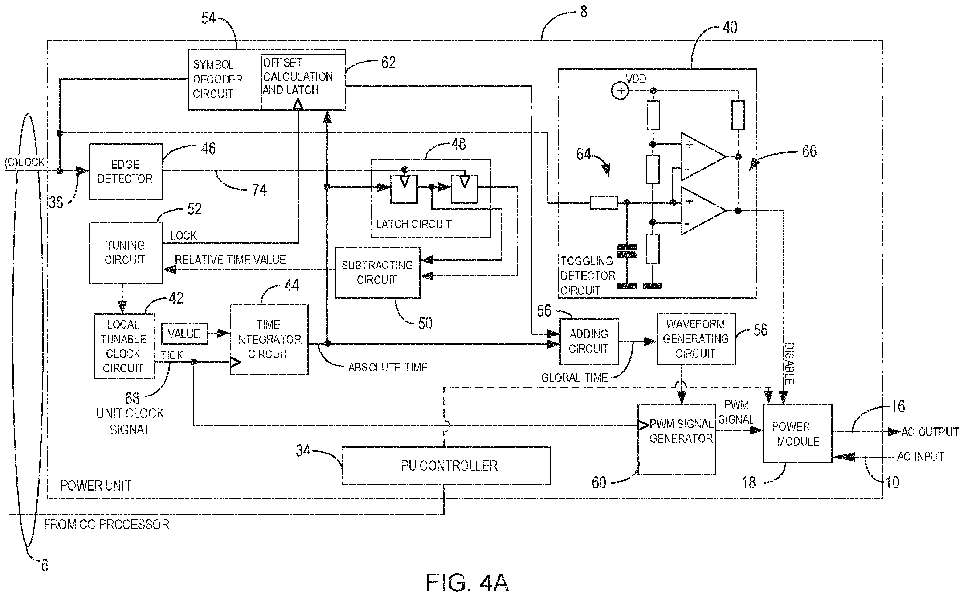

With reference to Fig. 4A-B and with continuing reference to all previous figures, in some non-limiting embodiments or examples, each PU 8 may be communicatively connected to CC 4 via, for example, a communication link 6 such that each PU 8 can receive the (C)LOCK signal 36 (among other signals) from the CC 4. For the purpose of simplicity, hereinafter only a single PU 8 will be described as receiving the (C)LOCK signal 36 from the CC 4. However, it is to be understood that this description may be applicable to any number of PUs 8 receiving the (C)LOCK signal 36 from the CC 4 (directly or via one or more upstream PUs 8 connected in series) on or about the same time. The PU 8 may evaluate the (C)LOCK signal 36 and perform various functions related thereto, as will be described below.

In some non-limiting embodiments or examples, the PU 8 may include a toggling detector 40, a tunable clock circuit 42, a time integrator circuit 44, a latch circuit 48, a subtracting circuit 50, a tuning circuit 52, a symbol decoder circuit 54, and adding circuit 56, a waveform generating circuit 58, a PWM signal generator 60, and an offset calculation and latch circuit 62, which may (or may not) be part of the symbol decoder circuit 54. Some or all of these circuits may be contained within or be a part of PU controller 34, though for purposes of better describing the principles of this disclosure, they are illustrated as separate components in Fig. 4A-4C.

The PWM signal generator 60 may be a circuit programmed or configured to output PWM pulses to the power module 18 which, in response, may output a desired AC waveform (or approximate AC waveform) corresponding to the PWM pulses on the AC output 16, such as through the switching operation discussed above. In some non-limiting embodiments, PWM signal generator 60 may be a separate component from power module 18 or PWM signal generator 60 may be part of or contained within power module 18.

In some non-limiting embodiments or examples, the toggling detector circuit 40 may be programmed or configured to detect the absence of ticking or pulses (e.g., toggling) of the (C)LOCK signal 36. This may be the case, for example, if the (C)LOCK signal 36 is "stuck" or fixed at a high or low level. For example, (C)LOCK signal 36 may become stuck due to a short circuit or faulty component in the physical layer of the printed circuit board (PCB) that may force the (C)LOCK signal 36 to a fixed value, such as 0 V or 3.3 V, which may be reflected as a logic "0" or "1" that is constant for an indefinite period of time, or at least until the signal becomes unstuck or the CC 4 resets. In some non-limiting embodiments, in response to detecting the absence of ticking or pulses of the (C)LOCK signal 36, toggling detector 40 may be configured to shut down the PU 8 from outputting the AC waveform on the AC output 16 or otherwise configuring the PU 8 into a safe state. In some non-limiting embodiments, the absence of ticking or pulses of the (C)LOCK signal 36 may be indicative of a global error in the distributed energy system 2, and by shutting down or otherwise configuring the PU 8 into a safe state, any negative effects or unsafe conditions associated with this global error can be avoided or mitigated. In an example, this shutting down may be accomplished by the toggling detector 40 outputting to a control terminal of the power module 18 a disable signal which causes the power module 18 to cease or not output the AC waveform on the AC output 16. In another example, this shutting down may be accomplished by the toggling detector circuit 40 outputting the disable signal to the PU processor 34 which may be programmed or configured to cease or terminate the operation of any of the circuitry used to generate the AC waveform on the AC output 16. For example, without limitation, the PU processor 34 may cause to cease or terminate the operation of the waveform generating circuit 58, the PWM signal generator 60, and/or the power module 18.

With reference to Fig. 4A, in some non-limiting embodiments or examples, the toggling detector circuit 40 may comprise a passive low-pass filter 64 configured to filter the incoming (C)LOCK signal 36 and a window comparator circuit 66 which may include a first comparator and second comparator connected in parallel. The window comparator circuit 66 may be configured to detect whether a DC-component of the filtered (C)LOCK signal 36 is at or near an expected value (e.g., within a given voltage window of the expected value) where the expected value is indicative of the presence of toggling of the (C)LOCK signal 36. By way of example, assuming absolute time values encoded on the (C)LOCK signal 36 transmitted from the CC 4 to the PU 8 are encoded in a way that ensures that over a certain amount of time the number of logical ones more or less equals the number of logical zeros (e.g., toggling is ongoing), the DC-component of the (C)LOCK signal 36 may have an expected value of approximately 0.5 of VDD. The window comparator circuit 66 can be configured to set a voltage window that surrounds this expected value and determines whether the DC-component of the (C)LOCK signal 36 falls within it. Returning to the above example, setting the thresholds of the window comparator 66 to a voltage window of, for example, VDD x 0.2 to VDD x 0.8 can allow detection of whether the filtered (C)LOCK signal 36 is close to VDD or to GND. In case the filtered (C)LOCK signal 36 is not within this voltage window (which may be indicative of a global error and the absence of toggling), the toggling detector circuit 40 may trigger a safe state operation, which may include outputting the disable signal which causes the power module 18 to cease or not output the AC waveform on the AC output 16.

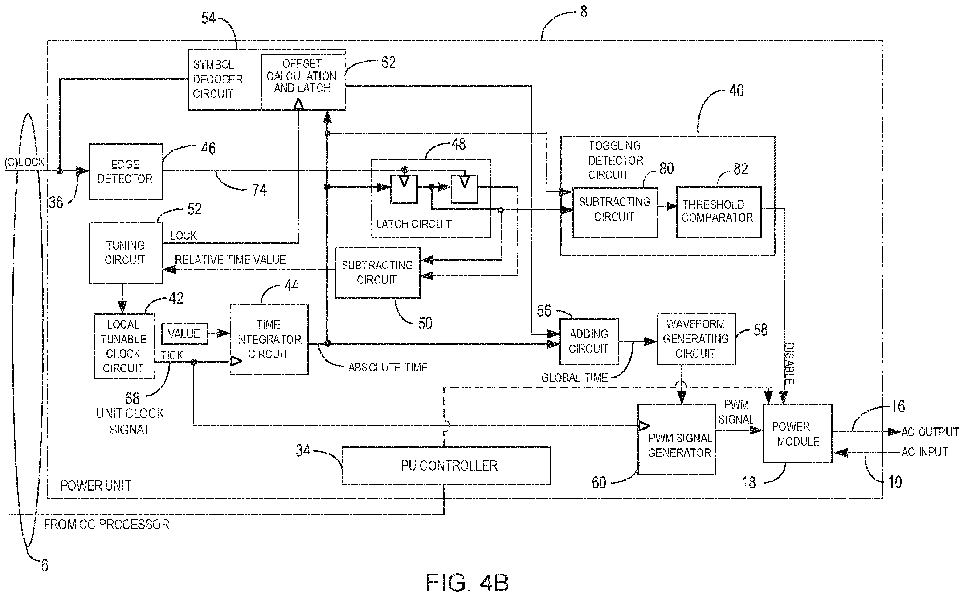

With reference to Fig. 4B, in some non-limiting embodiments or examples, the toggling detector circuit 40 may include a subtracting circuit 80 and a threshold comparator 82. In this embodiment, the absolute time output by the time integrator circuit 44 (described below) of the PU 8 may be constantly compared, via a subtracting circuit 80 and threshold comparator 82, to the current PU 8 absolute time as determined by the values stored in the latch circuit 48. For example, subtracting circuit 80 can calculate, from the absolute time output by time integrator circuit 44 and the time from the last received rising (and/or falling) edge (as stored in the latch circuit 48) a time from the last received edge until present, which may represent an ongoing or elapsed time measurement. As discussed above, the time between edges can be known and may be, e.g., equidistant. As such, toggling detector circuit 40 can expect that the elapsed time between edges does not exceed a certain value (e.g., that the time since the last edge does not exceed a pre-set value). Threshold comparator 82 can compare the actual elapsed time (as determined from the value in the latch circuit 48) to a threshold value (e.g., a value that exceeds the expected elapsed time by a set amount) and determine whether the elapsed time has exceeded the threshold. If the threshold value has been exceeded (e.g., if the difference between the actual time since the last rising edge and the expected time since the last rising edge is greater than the threshold value), as determined by the threshold comparator 82, the toggling detector circuit 40 may trigger a safe state operation as this may be indicative of a global error. The safe state operation may include outputting the disable signal which causes the power module 18 to cease or not output the AC waveform on the AC output 16.

In some non-limiting embodiments or examples, the tunable clock circuit 42 may be a pulse generator programmed or configured to generate a unit clock signal 68 for the PU 8 comprising clock ticks or pulses which may be output to the time integrator circuit 44 and/or the PWM signal generator 60. In this disclosure, when referring to element or reference number 42, the terms "tunable clock circuit" and "pulse generator" may be used interchangeably.

The time integrator circuit 44 may (e.g., it may be programmed or configured to) increment an internal integral value or counter value (e.g., an integer) thereof by a fixed value (e.g., by one) for each tick or pulse of the unit clock signal 68, i.e., the time integrator circuit 44 may act as a pulse counter that counts each tick or pulse of the unit clock signal 68. In this disclosure, when referring to element or reference number 44, the terms "time integrator circuit", ʺʺpulse counter" and "pulse counter circuit" may be used interchangeably.

The time integrator circuit 44 may output the current or present internal integral value thereof as a signal that constitutes a local absolute time of the PU 8. This absolute time value may be provided to the offset calculation and latch circuit 62, which may (or may not) be part of the symbol decoder circuit 52, and the adding circuit 56, each of which may be programmed or configured to perform its respective function described herein.

In some non-limiting embodiments or examples, the edge detector 46 may (e.g., it may be programmed or configured to) receive the (C)LOCK signal 36 from the CC 4 and to detect edges (rising edges and falling edges) of the (C)LOCK signal 36. Edge detector 46 may output an edge detect signal 74 (e.g., upon detection of a rising edge) that can trigger further operations, including operations of the latch circuit 48 which may be programmed or configured to hold at least two integral values in FIFO fashion. In an example, each time a rising edge of the (C)LOCK signal 36 is detected by edge detector 46, an edge detect signal 74 can be issued to the latch circuit 48 causing latch circuit 48 to store the current integral value output by the time integrator circuit 44 in the latch circuit 48. This current integral value stored in the latch circuit 48 may represent an absolute time value of the PU 8 in local time units being generated for each rising edge on (C)LOCK signal 36 that is detected. Latch circuit 48 may be configured to store the absolute time value (e.g., integral values) of the most recent two edge detect signals (e.g., associated with the most recent two detected rising edges or falling edges), such as in a FIFO fashion. For example, latch circuit 48 may include multiple latches, such as two latches, as depicted in Fig. 4A-C, each of which latches upon receipt of edge detect signal 74. A first latch in latch circuit 48 can store the most recent absolute time value and a second latch in latch circuit 48 can store the value that was previously contained in the first latch of latch circuit 48.

In some non-limiting embodiments or examples, the subtracting circuit 50 may (e.g., it may be programmed or configured to) subtract the two integral values stored by latch circuit 48 (e.g., the values stored by the first latch and the second latch), which are related to every two subsequent edges of the (C)LOCK signal 36, from one another in order to determine relative time values. The relative time values can be the relative time or distance between two successive rising (or falling) edges on (C)LOCK signal 36. The relative time values determined by subtracting circuit 50 can be provided to tuning circuit 52.

In an example, the tuning circuit 52 may (e.g., it may be programmed or configured to) tune (e.g., adjust, update) the local tunable clock circuit 42 which, as discussed above, is programmed or configured to generate a unit clock signal 68 for the PU 8 comprising clock ticks or pulses. In some non-limiting embodiments, tuning circuit 52 may adjust the local tunable clock circuit 42 based upon averaged relative time values, where the relative time values are derived, at least in part, from detecting the rising or falling edges of the (C)LOCK signal 36, as described above. For example, tuning circuit 52 may use the averaged relative time value as determined by the subtracting circuit 50 to tune tunable clock circuit 42 such that the tunable clock circuit 42 can generate a unit clock signal 68 that is aligned, e.g., aligned in terms of the frequency and the rising edges of, the (C)LOCK signal 36. In this way, the frequency of the output of the tunable clock circuit 42 of the PU 8 may correspond to, e.g., match or be some known percentage of, the frequency of local clock circuit 22 of the CC 4 which was used to generate the (C)LOCK signal 36. As mentioned, the clock ticks or pulses generated by tunable clock circuit 42 can be used to derive the PWM base frequency of the PWM signal generator 60.

In an example, if the tuning circuit 52 determines that the average relative time value equals the expected value as calculated according to the predefined (C)LOCK signal 36 frequency (or is within a threshold value thereof), the tuning circuit 52 may output a 'lock' signal indicating a lock state. The expected value can be calculated from known information on the frequency and counter rate of the (C)LOCK signal 36 and can be, for example, an average increase in a counter value between subsequent rising edges on (C)LOCK signal 36. The lock signal may be provided to the symbol decoder circuit 54.

In some non-limiting embodiments or examples, the symbol decoder circuit 54 may (e.g., it may be programmed or configured to) receive the (C)LOCK signal 36 and decode the symbols encoded on the (C)LOCK signal 36. Decoding the symbols may be accomplished by measuring, for each symbol, a time from the leading or rising edge to the trailing or falling edge. In an example, the symbols decoded by the symbol decoder circuit 54 may include or represent the value (provided by the cluster latch logic 28) encoded in the frame of symbols 31 that, in-turn, is encoded on the (C)LOCK signal 36 by the PWM generating circuit 32 of CC 4.

To ensure proper symbol decoding, the symbol decoder circuit 54 preferably decodes the symbols on the same basis as the symbols were encoded by the symbol generating circuit 30, e.g., symbols are encoded and decoded utilizing the below described percentages between the leading or rising edges and the trailing or falling edges:
- falling edge at 25% of total PWM period time after rising edge = logic zero ("0") symbol;
- falling edge at 50% of total PWM period time after rising edge = start of frame (SOF) symbol; and
- falling edge at 75% of total PWM period time after rising edge - logic one ("1") symbol.

However, this is not to be construed in a limiting sense since different percentages of times of the falling edges of total PWM periods of time after rising edges may be used to represent SOF, logic zero, and/or logic one.

Each time a complete frame comprising a frame of symbols is received by the symbol decoder circuit 54, the absolute time value may be restored by the symbol decoder circuit 54 from the symbols. As mentioned above, because the base frequency of the (C)LOCK signal 36 is derived from the local clock of the CC 4, decoding the (C)LOCK signal 36 can allow for the recovery of the absolute time value of the CC 4. n an example where the 'lock' signal output by the tuning circuit 52 is asserted to the symbol decoder circuit 54, any difference between the absolute time value from the (C)LOCK signal 36 (as determined by symbol decoder circuit 54) and the absolute time value of the PU 8 (as sampled from time integrator circuit 44) may be stored, as an offset value, in the offset calculation and latch circuit 62 and provided to adding circuit 56. This "lock" process and determination of the offset value may occur only once for each startup of PU 8, and it may account for any differences in startup time between all PUs 8 in system 2. For example, assume the CC 4 was started at time=0, PU 8 was started when time=60 seconds (one minute later), and 10 seconds elapses after PU 8 startup before the lock state is reached. Offset calculation and latch circuit 62 could calculate an offset of 60 seconds (70 seconds minus 10 seconds) which value can be latched in offset calculation and latch circuit 62 and continually added to the PU 8 absolute time using adding circuit 56, thereby accounting for the startup time of the PU 8. This process may allow for a global time value to be consistent (e.g., the same) in all PUs 8 regardless of when each particular PU 8 was started with respect to the CC 4 and with respect to other PUs 8.

In some non-limiting embodiments or examples, the adding circuit 56 may add the offset value stored in the offset calculation and latch circuit 62 to the absolute time output by the time integrator circuit 44 to generate and output a global time value (which is ultimately based on the local clock circuit 22 of CC 4). This global time value (which may be a global timestamp) can be provided to and used, for example, by the waveform generating circuit 56. In an example, where a number of PUs 8 are connected to the CC 4, the global time value may, and preferably is, identical for all of the PUs 8 connected to the CC 4, thereby allowing all PUs 8 to operate on a common global time value for purposes of synchronizing their operation. Determination of the global time value may be a one-time operation (e.g., performed once and then reused for a set duration while system operates), as an intermittent or periodic one (e.g., at regular or irregular intervals), or continuously (e.g., on an ongoing basis). For example, the global time value may be a temporary time value that changes or updates periodically according to a set time or operation, such as once each minute or once each time an offset value and/or absolute time output is generated. In addition, each PU 8 may calculate or determine the global time value independently, and each PU 8 may perform this calculation or determination in a same, similar, or different manner relative to the other PUs 8.

In some non-limiting embodiments or examples, based on the global time value received from the adding circuit 56, the waveform generating circuit 56 may generate setpoint values for the PWM signal generator 60 based on the global time value and a desired periodic function generated by the PWM signal generator 60 to generate the PWM signal (e.g., pulses) used to drive the power module 18 to generate the desired AC waveform on the AC output 16. For example, as discussed above with respect to Figs. 1B-1F, PU controller 34 may cause a respective duty cycle of a respective module voltage of each respective energy storage module 12 to generate an output voltage based on a combination of the respective module voltage of each respective energy storage module 12. The duty cycle of the respective module voltage may relate to a switched voltage scheme that uses a PWM type waveform based upon a PWM signal generated by PWM signal generator 60. For example, the switching frequency and/or PWM base frequency may be between 40 kHz and 100 kHz, such as around 90 kHz. If all PUs 8 connected to CC 4 (see, e.g., Fig. 1) have identical global time values, the output voltage reference waveforms for each PU 8 can be synchronized, thereby allowing some or all of the connected PUs 8 to be connected in parallel with respect to their AC output. Moreover, synchronizing the PWM base frequency of the connected PUs 8 (e.g., at 90 kHz) can optimize electromagnetic compatibility among the PUs 8. In some non-limiting embodiments, it is also possible to synchronize the edges of an edge-aligned PWM (e.g., the phase) using the global time value as a reference time.

The tuning operation and determination of the relative time value can be further illustrated by way of the following non-limiting implementation examples.

In a first example, the tunable clock circuit 42 may have a local clock frequency of 20 MHz ± 1000ppm that may be set by a voltage-controlled oscillator (VCXO). A phase locked loop (PLL), which may be positioned between tunable clock circuit 42 and time integrator circuit 44 or incorporated into one of these circuits, may be used to derive a fraction multiple of the local clock frequency, e.g., 90 MHz = 20 MHz (9/2). The time integrator circuit 44 may include an integral value that is incremented by 1 for a tick or pulse output by the tunable clock circuit 42. Assuming a non-limiting example of (C)LOCK signal 36 frequency of 10 kHz and a counter rate of the time integrator circuit 44 of 90 MHz, the average increase of the count value between two leading or rising edges of the (C)LOCK signal 36 is expected to be 9000. If the averaged relative time determined by the tuning circuit 52 (through the process described above) is greater than or less than 9000, the tunable clock circuit 42 may be tuned slower or faster, respectively, e.g., in an attempt to have a subsequently determined time value equal 9000. In this way, the tuning circuit 52 may tune the tunable clock circuit 42 whereupon the relative time value equals the value expected according to the frequency of the (C)LOCK signal 36.

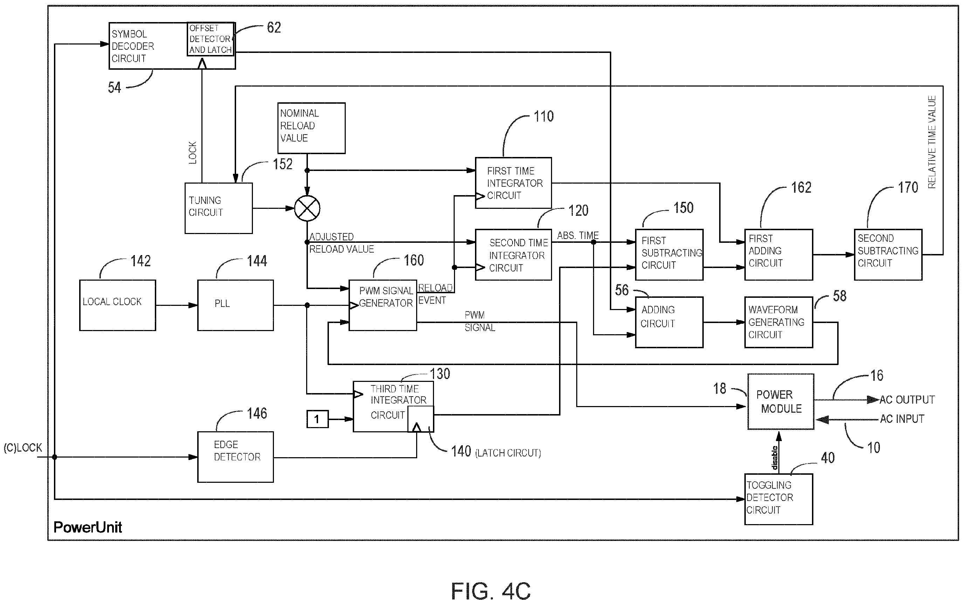

In a second example, with reference to Fig. 4C, the tunable clock circuit 42 may have a local clock frequency that may be set by a crystal oscillator (XTAL). A phase locked loop (PLL) 144 may be used to derive a fraction multiple of the local clock frequency, e.g., 90 MHz = 20 MHz (9/2). In this example, PWM signal generator 160 may include a time integrator circuit that may increase its integral value by 1 on each tick or pulse of the tunable clock circuit 42, may reset its integral value to zero each time the count reaches a preset reload value and may generate a reload event signal each time the reset to zero occurs (e.g., each time the reload value is reached). In an example, the reload value may have a nominal value, e.g., 1000, and may be valid for one complete clock cycle of the PWM at which point it can be adjusted (e.g., in integral steps) for the next clock cycle (e.g., 90 MHz / 1001 = 89.91 kHz; 90 MHz / 999 = 90.09 kHz). The reload event signal may trigger other operations of other circuitry of the PU 8, such as other discrete time circuits. In this manner, the PWM signal generator 160 in this embodiment can act as a tunable clock circuit with the reload event signal acting as a form of a unit clock signal.

In this embodiment, a first time integrator circuit 110 may receive the reload event signal and perform an integration step increase each time the reload event signal is received. Each integration step increase may coincide with the nominal reload value. For example, if the nominal reload value is 1000, each integration step increase may be a value of 1000. If nine reload events occur with a nominal reload value of 1000, for example, the integral value would reach 9000. While this circuit integrates the same value (e.g., the nominal reload value), the time rate (e.g, stream of reload events) is adjustable, such as by the PWM signal generator 160. Accordingly, for a given amount of time, the total integrator value reached at first time integrator circuit 110 depends on the number of actual reload values used, even if each stepwise increase in the integrator value is the same.

This embodiment may further include a second time integrator circuit 120. With respect to the second time integrator circuit 120, one integration step may be triggered each time a reload event occurs, and the value of each integration step can change based upon adjustments in the reload value. For example, if over nine clock cycles of the PWM, the reload values are adjusted to be, respectively: 1000, 999, 999, 1000, 1000, 1001, 1000, 999, and 1000, the total integral value for the second time integrator circuit 120 will be the sum of these reload values (i.e., 8998).

This embodiment may further include a third time integrator circuit 130, which may be activated simultaneously with the second time integrator circuit 120. This third time integrator circuit 130 may have an integral value set to 0 at the moment the PWM signal generator 160 begins its counter operation (e.g, at the onset or at the initial counter operation). The integral value of the third time integrator circuit 130 may by incremented by 1 at a rate that is a fraction of a multiple of the local lock frequency (e.g. 90 MHz). In some non-limiting embodiments or examples, the third time integrator circuit may also include a latch circuit 140 into which the current integral value may be stored upon occurrence of a leading or rising edge of the (C)LOCK signal 36 (as determined from edge detector 46 in the manner discussed above), thereby generating absolute time values for the leading or rising edges of the (C)LOCK signal 36. In this example, assuming a (C)LOCK signal 36 frequency of 10kHz and a counter rate of 90MHz, an average increase of the third second time integrator circuit 130 counter value between two rising edges of the (C)LOCK signal may be 9000.

In this embodiment, the PU 8 may include a first subtracting circuit 150 configured to perform a subtraction operation once a reload event occurs and a rising edge on the (C)LOCK signal 36 is detected since the previous reload event. Because the frequency of the (C)LOCK signal 36 may be lower than the PWM base frequency, this subtracting triggering condition may not always occur, and may not occur with each reload event. The first subtracting circuit 150 may be configured to subtract the integral value of the second time integrator circuit from the recent absolute time in the latch circuit (e.g., of the third time integrator circuit). Turning again to the example above, the integral value of the second time integrator circuit 120 is 8998 and the value stored in the latch circuit 140 of the third time integrator circuit 130 is 9001 in view of the operation of the third time integrator circuit 130 which increments its integral value by 1, as discussed above. Accordingly, the first subtracting circuit 150 may calculate and output a value (difference) of 3 (9001-8998=3).

In this embodiment, the PU 8 may include a first adding circuit 162 that may add the result of the subtraction by the first subtracting circuit 150 to the integral value of the first time integrator circuit 110. It may be appreciated that the result of this addition step reflects the absolute point in time (in PU local time units) on which the rising edge on (C)LOCK signal 36 was captured. Returning to the example above, the result of the subtraction by the first subtracting circuit 150 is 3 and the integral value of the first time integrator circuit 110 is 9000, thereby resulting in an output value (sum) of the first adding circuit 162 of 9003 (9000+3=9003).

In this embodiment, the PU 8 may include a second subtracting circuit 170 for subtracting the output of the first adding circuit 162 corresponding to the previous leading or rising edge of the (C)LOCK signal 36 from the most recent rising edge of the (C)LOCK signal 36 thereby generating the relative time value for leading or rising edges of the (C)LOCK signal 36. By way of example, second subtracting circuit 170 may operate similar to a latch circuit having a first latch and a second latch, where the first latch stores the most recent value received from the first adding circuit 162 and the second latch stores the immediately preceding value received from the first adding circuit 162 such that a difference between the two stored values can be determined. Returning to the example above, the output of the first adding circuit 162 is 9003. If one assumes the value of the most recent rising edge of the (C)LOCK signal 36 is 18002 (which is one realistic value reflecting an increase of close to 9000 from the previous rising edge value), the output value of the second subtracting circuit 170, which is indicative of a relative time value between the most recent two rising edges, is 8999 (18002-9003=8999). On average, the output of second subtracting circuit 170 should increase in steps corresponding to the average increase of the counter value between two rising edges on the (C)LOCK signal 36 which, in the example above, is 9000.

In this embodiment, the PU 8 may include a tuning circuit 152 for adjusting the reload values of PWM signal generator 160 whereupon the relative time value equals the expected time value according to the predefined (C)LOCK signal 36 frequency. For example, assuming a (C)LOCK signal 36 frequency of 10 kHz and a counter rate of 90MHz, the average increase of the count value between two rising edges on (C)LOCK may be 9000. Tuning circuit 152 can adjust the reload values based on an output of second subtracting circuit 170 to account for differences between the actual and expected value of this relative time value. In an example where the time-average relative time value is greater than or less than 9000, the reload value may be increased or decreased, respectively, e.g., in an attempt to have a subsequently determined relative time value equal to the expected value. For instance, continuing with the example above, the relative time value determined by second subtracting circuit 170 is 8999, which is below the expected relative time value of 9000. Accordingly, tuning circuit 152 may decrease the reload value to account for this difference between the actual and expected relative time values.

Other non-limiting examples or aspects are set forth in the following illustrative and exemplary numbered clauses:
Clause 1: Disclosed is a distributed electrical system, comprising: a cluster controller (4) including: a cluster controller clock circuit (22) operable or configured to generate a cluster clock signal (24); a cluster integrator logic circuit (26) comprising a counter (27), wherein a value of the counter is incremented by a toggling of the cluster clock signal (24); and a pulse width modulation (PWM) generating circuit (32) operable or configured to generate a system clock signal (36) and to encode the value of the counter as a frame of symbols (31) onto the system clock signal (36), wherein each symbol of the frame of symbols (31) is encoded onto the system clock signal (36) by setting a falling edge of the system clock signal (36) to a predetermined position relative to a preceding rising edge, and at least one synchronized electrical unit (8) communicatively connected to the cluster controller (4) and adapted to receive the system clock signal (36), wherein each synchronized electrical unit (8) includes: a tunable clock circuit (42) operable or configured to generate a unit clock signal (68); a tuning circuit (52) operable or configured to adjust the tunable clock circuit (42) such that the unit clock signal (68) is aligned in at least frequency with the system clock signal (36), wherein the tuning circuit (52) adjusts the tunable clock circuit (42) based upon relative time values, wherein the relative time values are derived at least in part from detecting the rising or falling edges of the system clock signal (36); a symbol decoder circuit (54) operable or configured to decode the frame of symbols (31) from the system clock signal (36) by detecting a position of the rising edges relative to the corresponding falling edges of the system clock signal (36) to determine a global time value, wherein the synchronized electrical unit (8) is configured to perform at least one function according to the global time value.
Clause 2: The distributed electrical system of clause 1, wherein the cluster controller (4) further comprises a symbol generating circuit (30) operable or configured to generate and output the frame of symbols (31) to the PWM generating circuit (32).
Clause 3: The distributed electrical system of clause 2, wherein the symbol generating circuit (30) generates the frame of symbols (31) by converting an absolute time value.
Clause 4: The distributed electrical system of any of clauses 1-3, wherein the value of the counter (27) is incremented by one for each pulse of the cluster clock signal (24).
Clause 5: The distributed electrical system of any of clauses 1-4, wherein the cluster controller further comprises a cluster latch logic circuit (28) which is operable or configured to store the value of the counter (27).
Clause 6: The distributed electrical system of clause 5, wherein the cluster latch logic circuit (28) is a part of the cluster integrator logic circuit (26).
Clause 7: The distributed electrical system of any of clauses 5 and 6, wherein the cluster latch logic circuit (28) is operable or configured to store the value of the counter (27) in the cluster latch logic (28) in response to a frame complete event signal (70) output by the symbol generating circuit (30).
Clause 8: The distributed electrical system of any of clauses 1-7, wherein the synchronized electrical unit (8) further comprises a toggling circuit (40) operable or configured to detect an absence of toggling in the system clock signal (36) and, in response to such detection, to generate a disable signal to disable a power module of the synchronized electrical unit (8).
Clause 9: The distributed electrical system of clause 8, wherein the toggling circuit comprises a window comparator operable or configured to detect whether a DC-component of the system clock signal (36) is within a threshold.
Clause 10: The distributed electrical system of any of clauses 1-9, wherein the tuning circuit (52) is further operable or configured to adjust the tunable clock circuit (42) such that the unit clock signal (68) is aligned along its rising edges with the rising edges of the system clock signal (36).
Clause 11: The distributed electrical system of any of clauses 1-10, further comprising at least a second synchronized electrical unit, wherein the second synchronized electrical unit is operable or configured to receive the system clock signal (36) and determine a global time value that is identical to the global time value determined by the first synchronized electrical unit (8).
Clause 12: The distributed electrical system of any of clauses 1-11, wherein the synchronized electrical unit comprises at least one AC mains output, at least one electrical energy storage element, and at least one power module operable for generating an AC output from energy stored in the at least one electrical energy storage element.
Clause 13: The distributed electrical system of any of clauses 1-12, wherein the synchronized electrical unit comprises a power module and a PWM signal generator circuit operable or configured to generate a PWM signal used to drive the power module, wherein the at least one function performed according to the global time value comprises generating the PWM signal.
Clause 14: A method for operating a distributed electrical system comprising a cluster controller (4) and at least one synchronized electrical unit (8) communicatively connected to the cluster controller (4), the method comprising: generating, e.g., by a cluster controller clock circuit (22), a cluster clock signal (24);incrementing a value of a counter (27) of a cluster integrator logic circuit (26) by toggling the cluster clock signal (24) (e.g., by toggling of the cluster clock signal); generating, e.g., by a pulse width modulation (PWM) generating circuit (32), a system clock signal (36) by encoding the value of the counter as a frame of symbols (31) onto the system clock signal (36), wherein each symbol of the frame of symbols (31) is encoded onto the system clock signal (36) by setting a falling edge of the system clock signal (36) to a predetermined position relative to a preceding rising edge; transmitting the system clock signal (36) from the cluster controller (4) to the synchronized electrical unit (8); generating, e.g., by a tunable clock circuit (42) of the synchronized electrical unit (8), a unit clock signal (68); adjusting, by a tuning circuit (52) of the synchronized electrical unit (8), the tunable clock circuit (42) such that the unit clock signal (68) is aligned in at least frequency with the system clock signal (36), wherein the tuning circuit (52) adjusts the tunable clock circuit (42) based upon relative time values, wherein the relative time values are derived at least in part from detecting the rising or falling edges of the system clock signal (36); decoding, by a symbol decoder circuit (54) of the synchronized electrical unit (8), the frame of symbols (31) from the system clock signal (36) by detecting a position of the rising edges relative to the corresponding falling edges of the system clock signal (36) to determine a global time value; and operating the synchronized electrical unit (8) based on the global time value to perform at least one function.
Clause 15: The method for operating a distributed electrical system of clause 14, further comprising: generating, e.g., by a symbol generating circuit (30), the frame of symbols (31) and outputting the frame of symbols (31) to the PWM generating circuit (32).
Clause 16: The method for operating a distributed electrical system of clause 15, wherein the frame of symbols (31) are generated by converting an absolute time value.
Clause 17: The method for operating a distributed electrical system of any of clauses 14-16, wherein incrementing the value of the counter (27) comprises incrementing the value by one for each pulse of the cluster clock signal (24).
Clause 18: The method for operating a distributed electrical system of any of clauses 14-17, further comprising storing, by a cluster latch logic circuit (28), the value of the counter (27).
Clause 19: The method for operating a distributed electrical system of clause 18, wherein storing, by the cluster latch logic circuit (28), the value of the counter (27) occurs in response to a frame complete event signal (70) being output by the symbol generating circuit (30).
Clause 20: The method for operating a distributed electrical system of any of clauses 14-19, further comprising: detecting, e.g., by a toggling circuit, an absence of toggling in the system clock signal (36); and in response to detecting the absence of toggling in the system clock signal (36), generating a disable signal to disable a power module of the synchronized electrical unit (8).
Clause 21: The method for operating a distributed electrical system of clause 20, wherein detecting the absence of toggling in the system clock signal (36) comprises detecting, by a window comparator, whether a DC-component of the system clock signal (36) is within a threshold.
Clause 22: The method for operating a distributed electrical system of any of clauses 14-21, wherein adjusting, e.g., by the tuning circuit (52) of the synchronized electrical unit (8), the tunable clock circuit (42) further comprises adjusting the tunable clock circuit (42) such that the unit clock signal (68) is aligned along its rising edges with the rising edges of the system clock signal (36).
Clause 23: The method for operating a distributed electrical system of any of clauses 14-22, wherein the distributed electrical system further comprises a second synchronized electrical unit, and the method further comprises: transmitting the system clock signal (36) from the cluster controller (4) to the second synchronized electrical unit (8), and determining, e.g., at the second synchronize electrical unit (8), a global time value that is identical to the global time value determined by the first synchronized electrical unit.
Clause 24: The method for operating a distributed electrical system of any of clauses 14-23, wherein the synchronized electrical unit comprises a power module and a PWM signal generator circuit, the method further comprising: operating the PWM signal generator circuit based on the global time value to generate a PWM signal; and driving the power module using the PWM signal.
Clause 25: The method for operating a distributed electrical system of clause 24, further comprising: generating, by the power module, AC power from energy stored in the synchronized electrical unit; and providing the AC power to an AC mains output of the synchronized electrical unit.
Clause 26: An electrical system comprising means for performing the steps of any of the above method clauses.
Clause 27: A computer program product comprising computer-executable instructions for causing a suitable system (e.g., a cluster controller and/or power unit controller) to perform (e.g., collectively) any of the above methods (e.g., steps of any of the above method clauses).

Although this disclosure has been described in detail for the purpose of illustration based on what is currently considered to be the most practical and preferred embodiments, it is to be understood that such detail is solely for that purpose and that the disclosure is not limited to the disclosed embodiments, but, on the contrary, is intended to cover modifications and equivalent arrangements that are within the spirit and scope of the appended claims. For example, it is to be understood that the present disclosure contemplates that, to the extent possible, one or more features of any embodiment can be combined with one or more features of any other embodiment.

## Claims

1. A method for operating a distributed electrical system comprising a cluster controller and at least one synchronized electrical unit communicatively connected to the cluster controller, the method comprising:
generating, by a cluster controller clock circuit, a cluster clock signal;
incrementing a value of a counter of a cluster integrator logic circuit by toggling the cluster clock signal;
generating, by a pulse width modulation (PWM) generating circuit, a system clock signal by encoding the value of the counter as a frame of symbols onto the system clock signal, wherein each symbol of the frame of symbols is encoded onto the system clock signal by setting a falling edge of the system clock signal to a predetermined position relative to a preceding rising edge;
transmitting the system clock signal from the cluster controller to the synchronized electrical unit;
generating, by a tunable clock circuit of the synchronized electrical unit, a unit clock signal;
adjusting, by a tuning circuit of the synchronized electrical unit, the tunable clock circuit such that the unit clock signal is aligned in at least frequency with the system clock signal, wherein the tuning circuit adjusts the tunable clock circuit based upon relative time values, wherein the relative time values are derived at least in part from detecting the rising or falling edges of the system clock signal;
decoding, by a symbol decoder circuit of the synchronized electrical unit, the frame of symbols from the system clock signal by detecting a position of the rising edges relative to the corresponding falling edges of the system clock signal to determine a global time value; and
operating the synchronized electrical unit based on the global time value to perform at least one function.

2. The method for operating a distributed electrical system of claim 1, further comprising:
generating, by a symbol generating circuit, the frame of symbols and outputting the frame of symbols to the PWM generating circuit.

3. The method for operating a distributed electrical system of claim 2, wherein the frame of symbols are generated by converting an absolute time value.

4. The method for operating a distributed electrical system of any of claims 1-3, wherein incrementing the value of the counter comprises incrementing the value by one for each pulse of the cluster clock signal, wherein the value of the counter is incremented after each pulse of the cluster clock signal or after a plurality of pulses have occurred.

5. The method for operating a distributed electrical system of any of claims 1-4, further comprising storing, by a cluster latch logic circuit, the value of the counter.

6. The method for operating a distributed electrical system of claim 5, wherein storing, by the cluster latch logic circuit, the value of the counter occurs in response to a frame complete event signal being output by the symbol generating circuit.

7. The method for operating a distributed electrical system of any of claims 1-6, further comprising:
detecting, by a toggling circuit, an absence of toggling in the system clock signal; and
in response to detecting the absence of toggling in the system clock signal, generating a disable signal to disable a power module of the synchronized electrical unit.

8. The method for operating a distributed electrical system of claim 7, wherein detecting the absence of toggling in the system clock signal comprises detecting, by a window comparator, whether a DC-component of the system clock signal is within a threshold.

9. The method for operating a distributed electrical system of any of claims 1-8, wherein adjusting, by the tuning circuit of the synchronized electrical unit, the tunable clock circuit further comprises adjusting the tunable clock circuit such that the unit clock signal is aligned along its rising edges with the rising edges of the system clock signal.

10. The method for operating a distributed electrical system of any of claims 1-9, wherein the distributed electrical system further comprises a second synchronized electrical unit, and the method further comprises:
transmitting the system clock signal from the cluster controller to the second synchronized electrical unit, and
determining, at the second synchronize electrical unit, a global time value that is identical to the global time value determined by the first synchronized electrical unit.

11. The method for operating a distributed electrical system of any of claims 1-10, wherein the synchronized electrical unit comprises a power module and a PWM signal generator circuit, the method further comprising:
operating the PWM signal generator circuit based on the global time value to generate a PWM signal; and
driving the power module using the PWM signal.

12. The method for operating a distributed electrical system of claim 11, further comprising:
generating, by the power module, AC power from energy stored in the synchronized electrical unit; and
providing the AC power to an AC mains output of the synchronized electrical unit.

13. A system comprising means to perform the steps of any of the above method claims.

14. A computer program product comprising computer-executable instructions for causing a cluster controller and/or power unit controller to collectively perform or cause to be performed any of the above methods.

15. A distributed electrical system, comprising:
a cluster controller (4) including:
a cluster controller clock circuit (22) configured to generate a cluster clock signal (24);
a cluster integrator logic circuit (26) comprising a counter (27), wherein a value of the counter is incremented by a toggling of the cluster clock signal (24); and
a pulse width modulation (PWM) generating circuit (32) configured to generate a system clock signal (36) and to encode the value of the counter as a frame of symbols (31) onto the system clock signal (36), wherein each symbol of the frame of symbols (31) is encoded onto the system clock signal (36) by setting a falling edge of the system clock signal (36) to a predetermined position relative to a preceding rising edge, and
at least one synchronized electrical unit (8) communicatively connected to the cluster controller (4) and adapted to receive the system clock signal (36), wherein each synchronized electrical unit (8) includes:
a tunable clock circuit (42) configured to generate a unit clock signal (68);
a tuning circuit (52) configured to adjust the tunable clock circuit (42) such that the unit clock signal (68) is aligned in at least frequency with the system clock signal (36), wherein the tuning circuit (52) adjusts the tunable clock circuit (42) based upon relative time values, wherein the relative time values are derived at least in part from detecting the rising or falling edges of the system clock signal (36);
a symbol decoder circuit (54) configured to decode the frame of symbols (31) from the system clock signal (36) by detecting a position of the rising edges relative to the corresponding falling edges of the system clock signal (36) to determine a global time value,
wherein the synchronized electrical unit (8) is configured to perform at least one function according to the global time value.
